# EUROPEAN PATENT APPLICATION

(11) **EP 1 391 838 A1**
(43) Date of publication of application: **25.02.2004**
(21) Application number: 02728185.6
(22) Date of filing: 29.05.2002
(51) Int. Cl.: G06F 17/60

(54) **INSURANCE SYSTEM**

(30) Priority: 29.05.2001 JP 2001160803
(71) Applicant: Matsushita Electric Industrial Co., Ltd., Kadoma-shi, Osaka 571-8501 (JP)
(72) Inventor: HATANO, Kouji, Minato-ku, Tokyo 108-0073 (JP); SUGIURA, Masataka, Setagaya-ku, Tokyo 158-0082 (JP); TSUKAMOTO, Yoshihiro, Ota-ku, Tokyo 144-0046 (JP); TERASAKI, Satoshi, Machida-shi, Tokyo 194-0022 (JP)
(74) Representative: Grünecker, Kinkeldey, Stockmair & Schwanhäusser Anwaltssozietät
(86) International application number: PCT/JP2002/005177
(87) International publication number: WO 2002/097694

(57) **Abstract**

An insurance system that guarantees re-distribution of electronically distributed authorized data. The insurance system is constructed in such a way that a right to receive re-distribution is generated contingent upon taking out an insurance policy, and can thereby implement an insurance system capable of smoothly carrying out re-distribution of contents electronically distributed through a network. Furthermore, the insurance system is constructed in such a way as to receive re-distribution through the insurance service server, which allows the insurance service server to control re-distribution independently and prevents illegal re-distributions as a consequence.

## Description

### Technical Field

The present invention relates to an insurance system for guaranteeing re-distribution of contents distributed through a network in the event of loss of the contents due to erasure by mistake, etc., an apparatus making up the system and a processing program for realizing the system, which is particularly intended to eliminate users' sense of insecurity of loss of the contents due to a machine crash or erasure by mistake.

### Background Art

There are indications that services of distributing music contents to user terminals through a network (cable, wireless, and broadcasting) are becoming increasingly widespread in recent years.

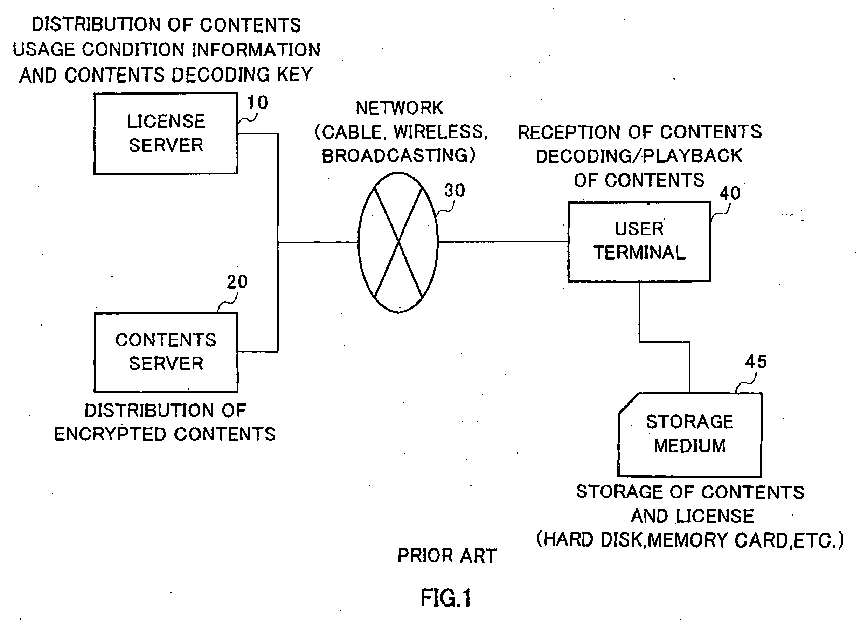

As shown in FIG.1, this system for providing music contents distribution services is provided with a contents server 20 that distributes encrypted music contents through a network 30, a license server 10 that distributes information on contents usage conditions or a contents decoding key through the network 30, a user terminal 40 that receives the purchased contents and license information and carries out decoding/playback of the contents and a storage medium 45 such as a hard disk or memory card that stores purchased contents.

In this system, the music contents purchased by the user are encrypted and sent from the contents server 20 and a decoding key for decrypting the music contents and information that specifies contents usage conditions are sent from the license server 10 to the user terminal 40. The user terminal 40 stores the received music contents in the storage medium 45, and decodes the encrypted music contents using the decoding key and playbacks the contents based on the user' s playback instruction. The user can playback the purchased music contents repeatedly within the range allowed under the usage conditions.

Furthermore, contents and license information to be distributed are also individually encrypted with attribute information (SD key, terminal certificate, PC serial No., etc.) of the user terminal and storage medium and sent to the user terminal to thereby prevent abuses by third parties.

Furthermore, it is also possible to consider a system in which upon payment by the user terminal for receiving a license, the distribution server sends an electronic receipt to the user terminal in exchange for the billing.

However, when the user erases music contents stored in the storage medium by mistake or the music contents are lost by a machine crash, the conventional system is not provided with any remedial means, and therefore the user must re-purchase the music contents, which causes the user to feel great insecurity about the service of electronically distributing contents, etc.

However, this does not necessarily means that such a problem can be solved if the contents distribution service provider performs re-distribution of the contents or license based on the user's request. When the contents distribution service provider complies with the request for the re-distribution free of charge, this would require the contents distribution service provider to assume considerable economical burden. Furthermore, the contents distribution service provider needs to develop/introduce a special subsystem for the re-distribution and financing therefor.

Moreover, certifying the loss of contents or license is practically difficult and it is not possible to verify the authenticity of an accident report of the user. This may provoke frequent abuses of receiving re-distribution based on false accident reports.

Furthermore, the contents distribution service provider may be in condition not to respond to the user' s request for re-distribution for various reasons such that the carrier stops the disclosure of contents requested by the user or the server goes down or the distribution services are stopped. Under such circumstances, when a contents purchasing contract is concluded contingent upon re-distribution, there is consequently some risk of the carrier's failing to fulfill the contract.

### Disclosure of Invention

It is an object of the present invention to solve these conventional problems and provide an insurance systemforsmoothly re-distributingcontents,etc.,which are electronically distributed through a network and provide an apparatus for constructing the system and a processing program for implementing the system.

This object is attained by an insurance system that guarantees re-distribution of electronically distributed authorized data, adapted to generate the right to receive re-distribution contingent upon signing of an insurance contract.

### Brief Description of Drawings

FIG.1 is a block diagram of a conventional contents distribution system;
FIG.2 illustrates an overall configuration of an insurance system according to an embodiment of the present invention;
FIG.3 illustrates a front-end configuration of the insurance system of the embodiment;
FIG.4 is a processing flow when an insurance contract is signed with a distribution service provider in the insurance system of the embodiment;
FIG.5 is a processing flowwhen an insurance contract is signed with a user in the insurance system of the embodiment;
FIG.6A illustrates a data configuration of a re-distribution history DB in the insurance system of the embodiment;
FIG.6B illustrates a data configuration of an insurance contract DB in the insurance system of the embodiment;
FIG.7 illustrates a data configuration of a license list in the insurance system of the embodiment;
FIG.8 is a processing flow during license distribution in the insurance system of the embodiment;
FIG.9 illustrates packaging of an insurance policy and license in the insurance system of the embodiment;
FIG.10 is a processing flow when contents are used in the insurance system of the embodiment;
FIG.11 illustrates a back-end configuration of the insurance system of the embodiment;
FIG.12 is a processing flow when an accident occurs in the insurance system of the embodiment;
FIG.13 is a processing flow of an insurance contract and license purchase in the insurance system of the embodiment;
FIG.14 is a processing flow of re-distribution in the insurance system of the embodiment;
FIG.15 is a processing flow of license purchase and insurance contract in the insurance system of the embodiment; and
FIG.16 illustrates a content example of a license in the insurance system of the embodiment.

### Best Mode for Carrying out the Invention

### (Embodiment 1)

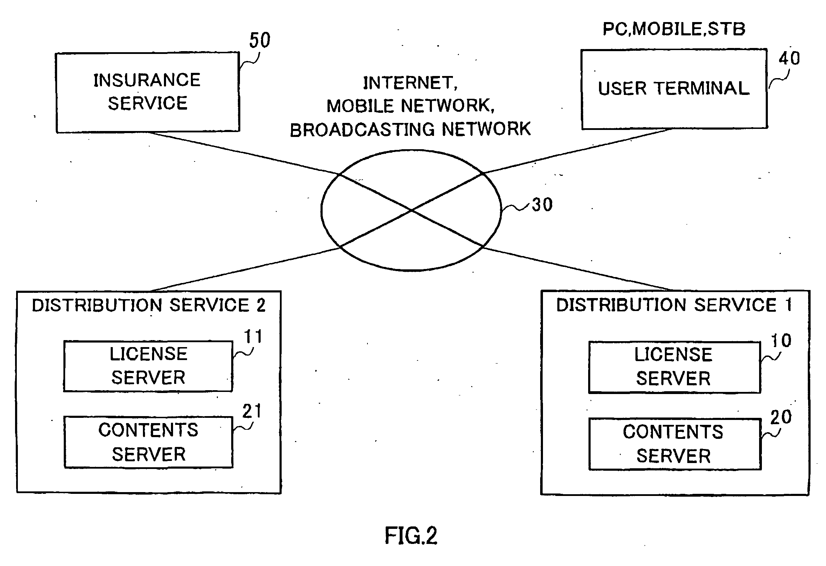

As shown in FIG.2, the insurance system according to this embodiment is constructed of a plurality of distribution services 1 and 2 including contents servers 20 and 21 and license servers 10 and 11, a user terminal 40 made up of a PC (Personal Computer), mobile terminal or STB (Set Top Box), etc., an insurance service server 50 that executes an insurance service and a network 30 that connects these sections, such as the Internet, mobile network, broadcasting network. The contents servers 20 and 21 distribute encrypted electronic contents themselves and the license servers 10 and 11 issue a license to make the electronic contents available. The information of this license includes a decoding key for decrypting the encrypted electronic contents.

This system introduces a service to allow the user to receive re-distribution of purchased contents or license free of charge. However, when a free re-distribution service is introduced, the burden on the distribution service provider is increased considerably. Thus, the right to receive re-distribution is sold on a chargeable basis as a "re-distribution license" and when the contents or license is lost, only the user who has the re-distribution license is entitled to receive re-distribution free of charge.

Furthermore, the system is constructed in such a way that the insurance service server 50 is provided as an independent section dedicated to processing for re-distribution and the plurality of distribution services 1 and 2 share this insurance service server 50.

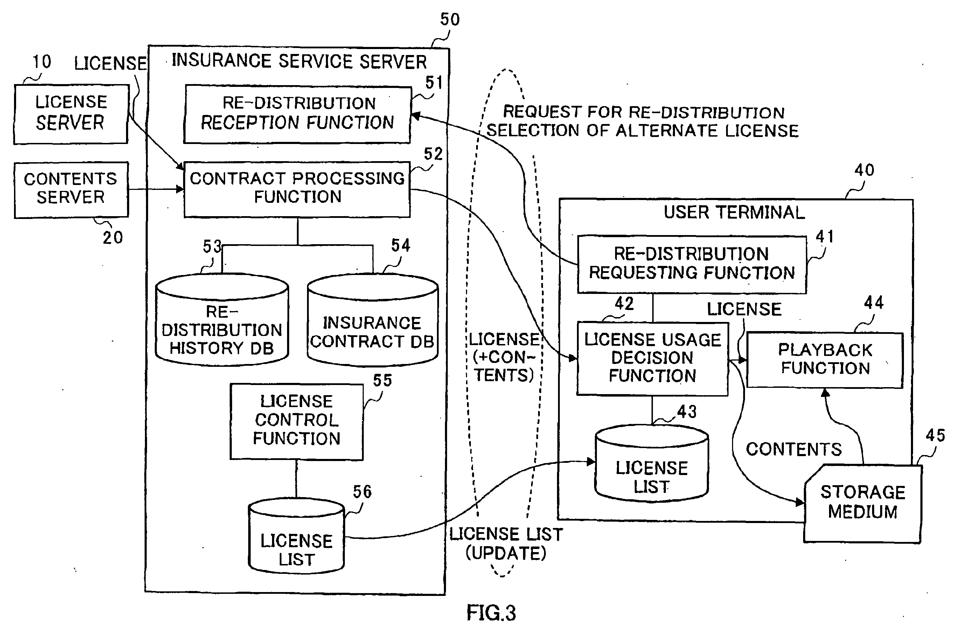

As shown in FIG.3, the user terminal 40 is provided with a playback function 44 for reproducing contents stored in the storage medium 45, a license list 43 that describes information indicating the validity/invalidity of the license owned by the user, a license usage decision function 42 that decides whether the contents can be playbacked or not with reference to the license list 43 and a re-distribution requesting function 41 for requesting the insurance service server 50 to re-distribute the contents or license when lost.

As shown in FIG.3, the insurance service server 50 is provided with a re-distribution reception function 51 that receives a request for re-distribution, a contract processing function 52 that makes an insurance contract with the distribution service provider or the user, an insurance contract database (DB) 54 that stores insurance contract information, a re-distribution history DB 53 that stores information on a history of re-distributions to the user, a license control function 55 that controls licenses and a license list 56 that describes information on the validity/invalidity of each license.

The respective functions of the user terminal 40 and insurance service server 50 are the functions implemented by operating a computer incorporated in the user terminal 40 or insurance service server 50 according to a program.

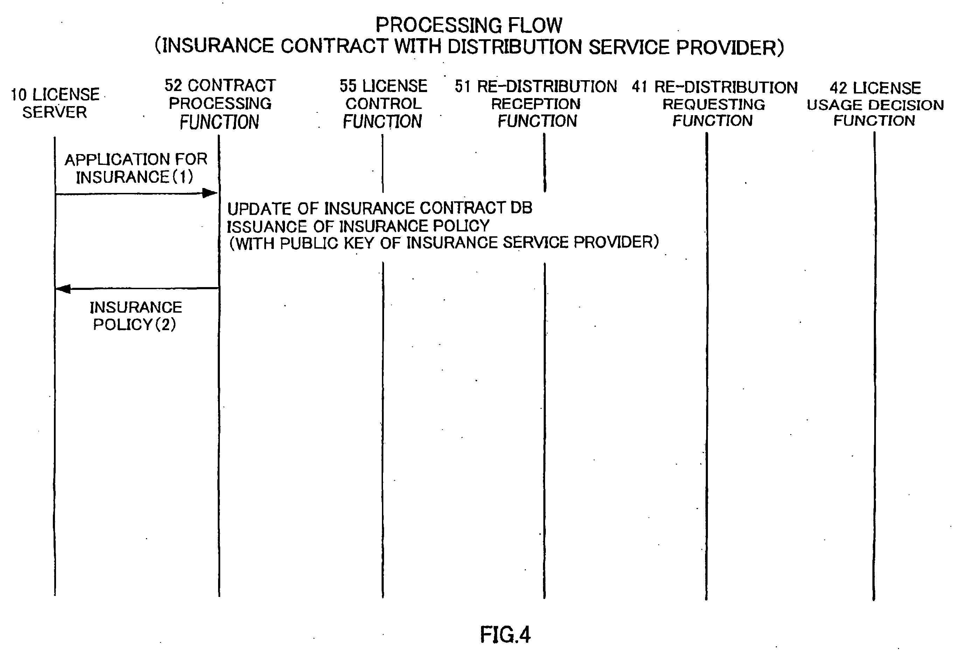

FIG.4 shows a processing flow when the distribution service provider signs an insurance contract with the insurance service server 50 in this system. This processing flow (the same will apply to the processing flows hereinafter) puts the respective functions of the insurance service server 50 and user terminal 40, and the license server 10 on vertical axes and expresses processing between the vertical axes using arrows.
(1) The distribution service provider applies for insurance to the insurance service server 50 from the license server 10 using a user interface (UI) for taking out an insurance policy. At this time, the distribution service provider inputs desired re-distribution conditions using the UI. In response to this, the contract processing function 52 of the insurance service server 50 issues an insurance policy accompanied by a public key of an insurance service provider. The content of this insurance contract is recorded in the insurance contract DB 54,
(2) the issued insurance policy is sent to the license server 10. The insurance policy may be printed on paper and sent to the distribution service provider.

The distribution service provider who has taken out an insurance policy displays information indicating that insurance covering re-distribution of contents in the event of loss is available on a portal page for application for distribution contents provided by the carrier, for example.

The UI for the user to take out an insurance policy displays this portal page, for example, on a screen of the user terminal 40, which is shown by clicking on "Apply for insurance."

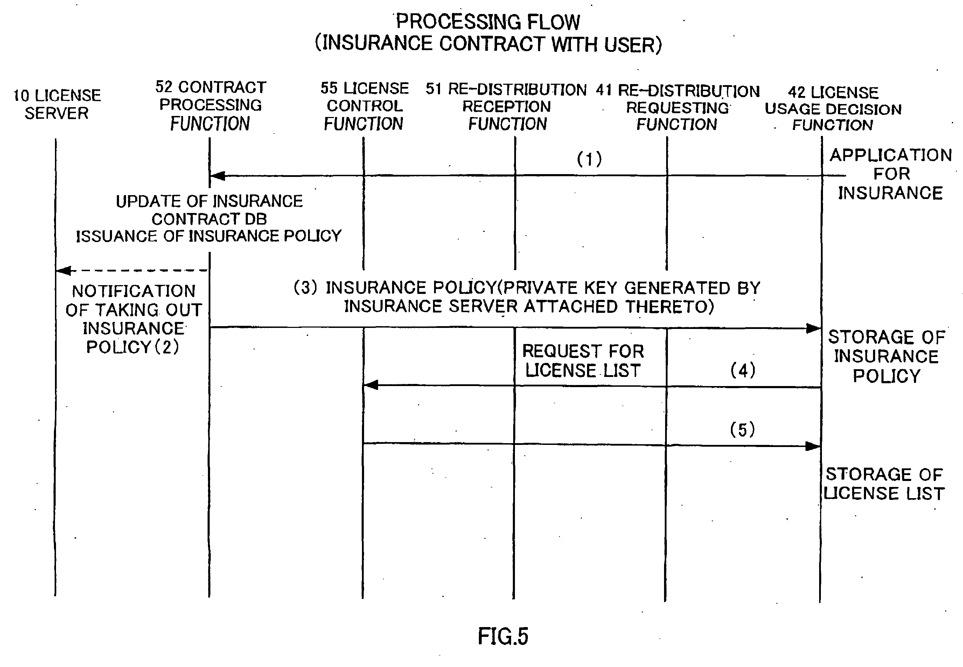

FIG.5 shows a processing flow between the user terminal 40 and insurance service server 50 when the user takes out an insurance policy.
(1) When the user displays an insurance application screen on the user terminal 40, confirms the insured content, enters the user's name, a license ID, etc., of the contents to be purchased and executes the application, the contract processing function 52 of the insurance service server 50 issues an insurance policy and records the content of this insurance contract in the insurance contract DB 54 (the insurance contract DB 54 records insurance contracts organized by user). At this time, the contract processing function 52 creates a pair of public key and private key for each insurance contract, records the keys in the insurance contract DB 54 and attaches the private key to the insurance policy. (Furthermore, the contract processing function 52 provides an entry field for the user who signed the contract in the record of the re-distribution history DB 53).
(2) The contract processing function 52 of the insurance service server 50 notifies the license server 10 that the user has taken out an insurance policy. However, this processing is not mandatory.
(3) The contract processing function 52 of the insurance service server 50 sends the issued insurance policy to the license usage decision function 42 of the user terminal 40. The license usage decision function 42 stores this insurance policy in the storage medium 45.

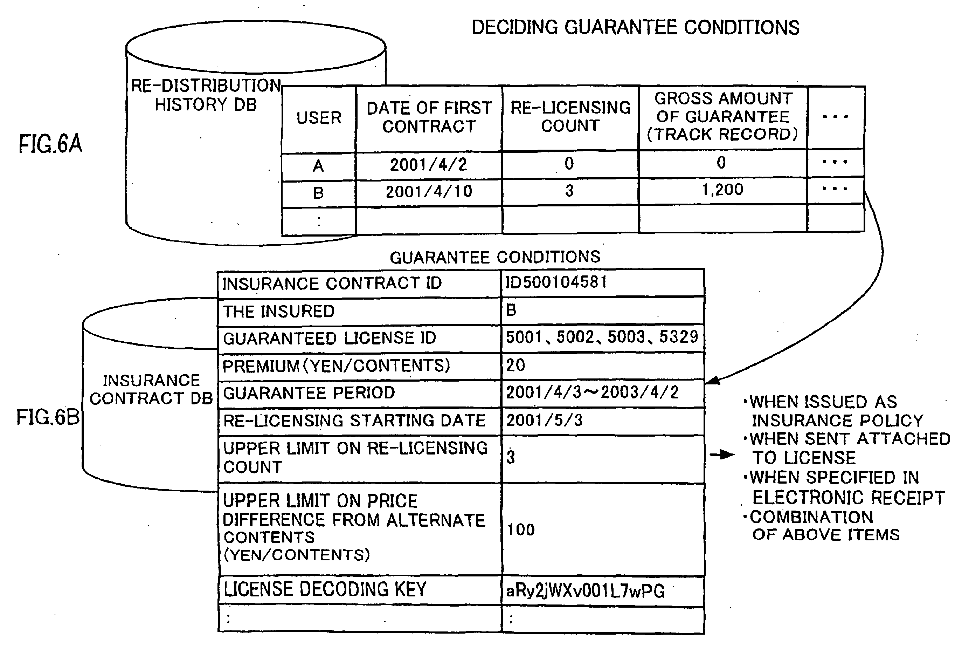

   FIG.6B illustrates content of an insurance policy. The insurance policy includes the following items: Insurance contract ID (ID for uniquely identifying an insurance contract), the insured (name of the user who applied for the insurance), guaranteed license ID (ID for identifying insured license. For one content, a plurality of licenses are set such as license allowing only viewing, license for a copy and a plurality of license IDs are described to purchase those licenses), insurance premium (yen/contents) (insurance premium paid by the user), guarantee period (period during which re-distribution is insured), re-licensing starting date (date on which re-distribution of the license is started. A starting date is set shifted from the first day of the guarantee period to deal with repeated losses of contents), re-licensing count upper limit (upper limit on a re-licensing count. This count is provided to handle repeated losses of contents), upper limit on price difference from alternate contents (when re-distribution of the same contents is impossible due to discontinuation of disclosure of contents, etc., a license for alternate contents is issued within this limit of the price difference) and license decoding key (private key created for each insurance policy attached to insurance contract).
   Furthermore, FIG.6A illustrates a record of the re-distribution history DB 53. As the re-distribution history record, the name of the user, date of the first contract, re-licensing count indicating the number of times licenses are re-distributed, gross amount of guarantee (actual result) (sum total of actual selling prices of contents re-distributed free of charge), etc., are described. In the entry field for the user who signed the contract, the name of the user, date of the contract, re-licensing count and gross amount of guarantee are described.
(4) The license usage decision function 42 of the user terminal 40 takes the occasion of the insurance contract to request the license control function 55 of the insurance service server 50 for (to update) the license list concerning the user.
(5) The license control function 55 of the insurance service server 50 detects the license whose insured person is the user from the insurance contract DB 54, extracts the license list from the license list 56 and sends it to the license usage decision function 42 of the user terminal 40. The license usage decision function 42 stores this in the license list 43.

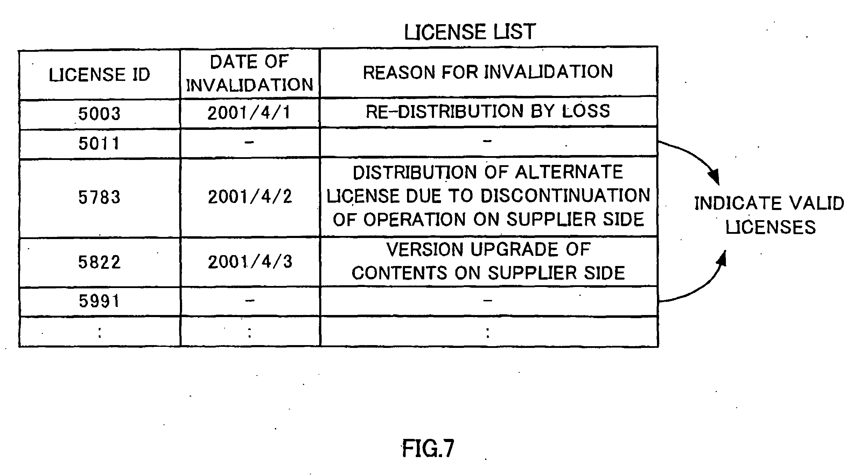

FIG.7 shows an example of the license list. This list describes a license ID, date on which the license became invalid and the reason for invalidation. Alicense, whose date of invalidation field and reason for invalidation field are blank, is valid.

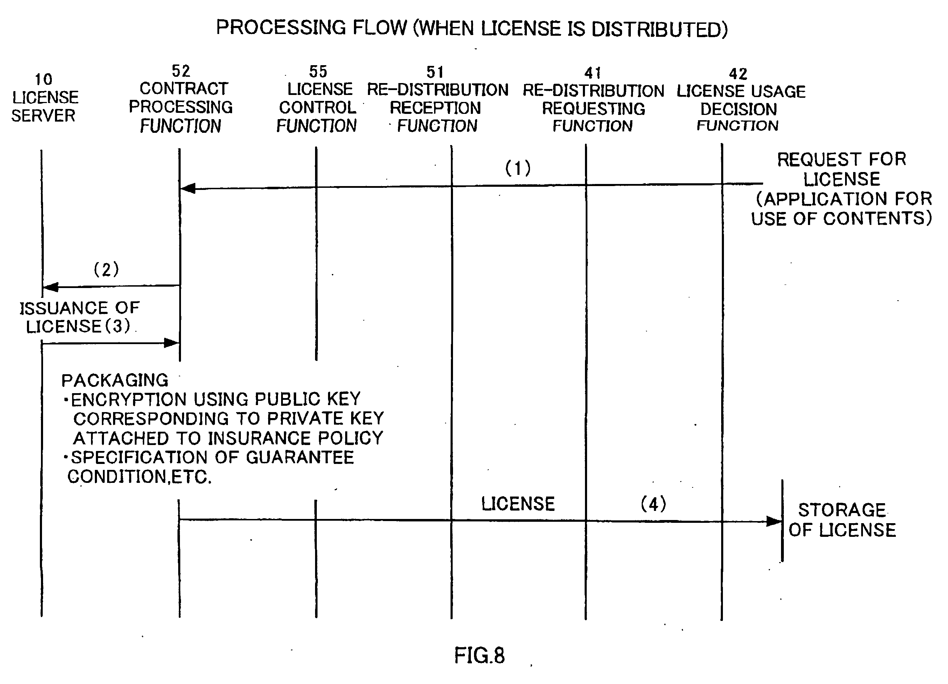

FIG.8 shows a flow after the user applies for a purchase of insured contents and requests for its license from the user terminal 40 until the license is sent to the user terminal 40. The purchased contents are sent from the contents server 20 to the user terminal 40 in encrypted form and stored in the storage medium 45. This transmission route may be the same as or different from that for the license. Here, the distribution route for the encrypted contents will not be particularly discussed. Anyway, the contents are not allowed to be playbacked until the contents are stored in the storage medium 45 and the license is acquired.
(1) The user shows a contents purchase application screen on the user terminal 40, enters the user's name, contents tobepurchased, license ID, etc., and executes the license request.
(2) The contract processing function 52 of the insurance service server 50 transmits the license request received from the user terminal 40 to the license server 10.
(3) The license server 10 issues a license including a decoding key of the purchased contents and sends the license to the contract processing function 52 of the insurance service server 50.
   The contract processing function 52 encrypts the license issued by the license server 10 using a public key corresponding to the private key attached to the insurance policy. Furthermore, information on the guarantee conditions specified by the insurance policy is added to the encrypted license and packaged.
(4) The contract processing function 52 of the insurance service server 50 sends the packaged license to the user terminal 40. The license usage decision function 42 of the user terminal 40 stores the encrypted license and information on the guarantee conditions.

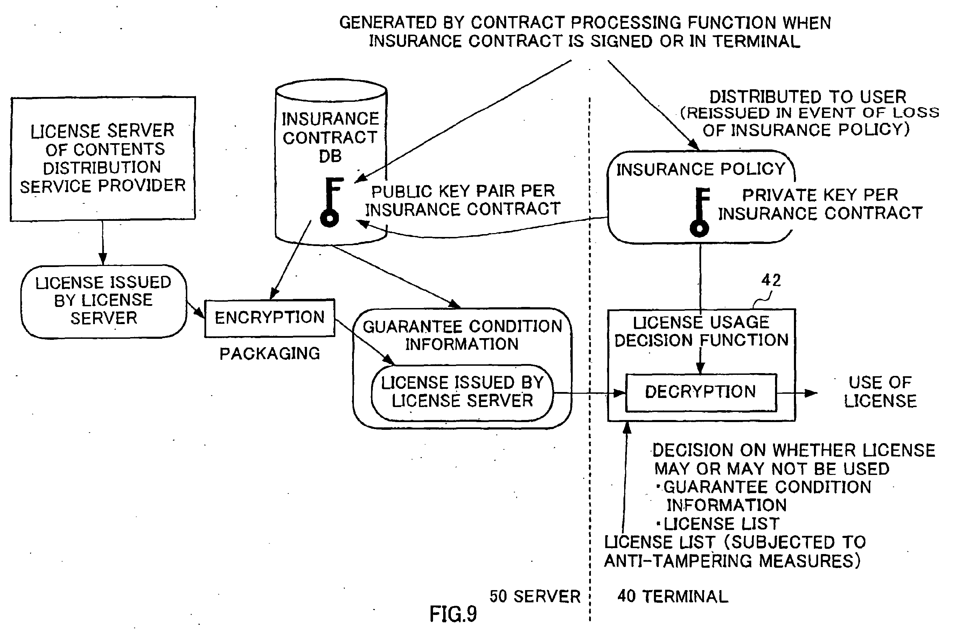

FIG.9 schematically expresses these processing steps. The insurance service server 50 encrypts the license issued by the license server using a public key for each insurance contract and packages this encrypted license and information on the guarantee conditions, and sends it to the user terminal 40. The license usage decision function 42 of the user terminal 40 stores the encrypted license and the information on the guarantee conditions.

To decide whether the license can be used or not when contents are playbacked, the license usage decision function 42 uses the stored information on the guarantee conditions together with the information on the license list 43. Furthermore, when it is decided that the license canbe used, the license usage decision function 42 decodes the encrypted license using a private key attached to the insurance policy and outputs it to the playback function 44. The playback function 44 decodes the encrypted contents using the decoding key included in the license and playbacks the contents.

Here, this embodiment has described the case where a pair of public key and private key are created when the insurance contract is signed through the contract processing function 52 of the insurance service server 50, but it is also possible to create this key pair inside the user terminal 40 and send the public key to the insurance service server 50.

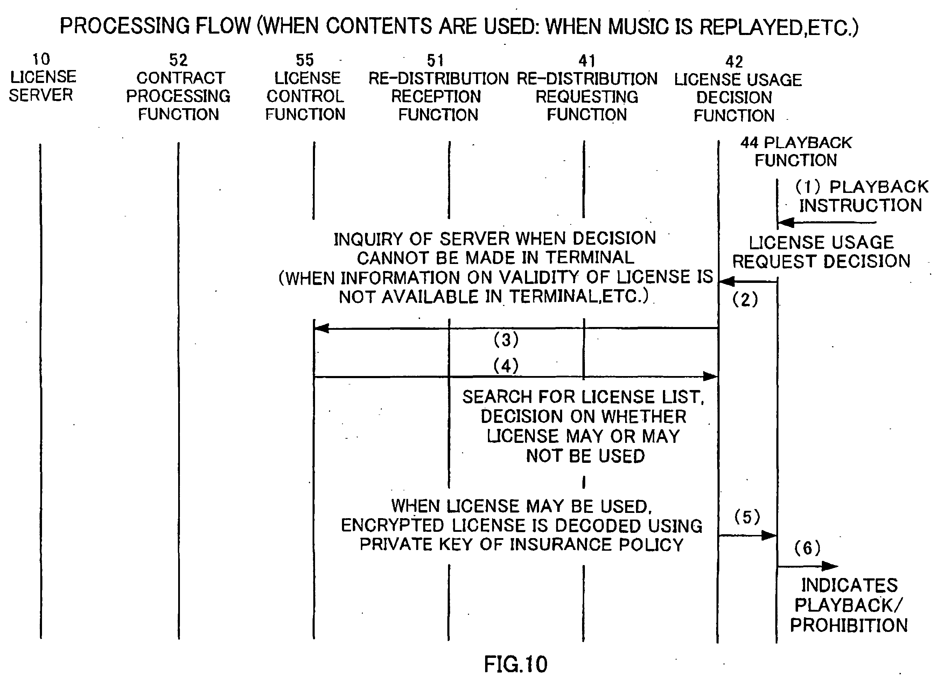

FIG.10 shows a processing flow when contents are playbacked at the user terminal 40.
(1) When the user gives a contents playback instruction,
(2) the playback function 44 of the user terminal 40 specifies a license ID of the license concerning the contents and requests the license usage decision function 42 to decide whether the license can be used or not. The license usage decision function 42 decides the validity of the corresponding license based on the information on the license list 43 and information on the guarantee conditions.
(3) When it is not possible to decide the validity of the license due to the absence of the information indicating whether the corresponding license is valid or not in the user terminal 40, the license usage decision function 42 inquires of the license control function 55 of the insurance service server 50 about the validity of the license by specifying the license ID.
(4) The license control function 55 of the insurance service s erver 50 searches the license list 56, identifies whether the specified license ID is invalid or not and transmits the identification result to the license usage decision function 42 of the user terminal 40.
(5) When the license is valid, the license usage decision function 42 decodes the encrypted license using the private key attached to the insurance policy and outputs it to the playback function 44. When the license is invalid, the license usage decision function 42 outputs the information of invalidity to the playback function 44.
(6) When the license is given, the playback function 44 decodes the encrypted contents using the decoding key included in the license and playbacks the contents. Furthermore, when the invalidity of the license is informed, the playback function 44 displays that the contents are not allowed to be playbacked.

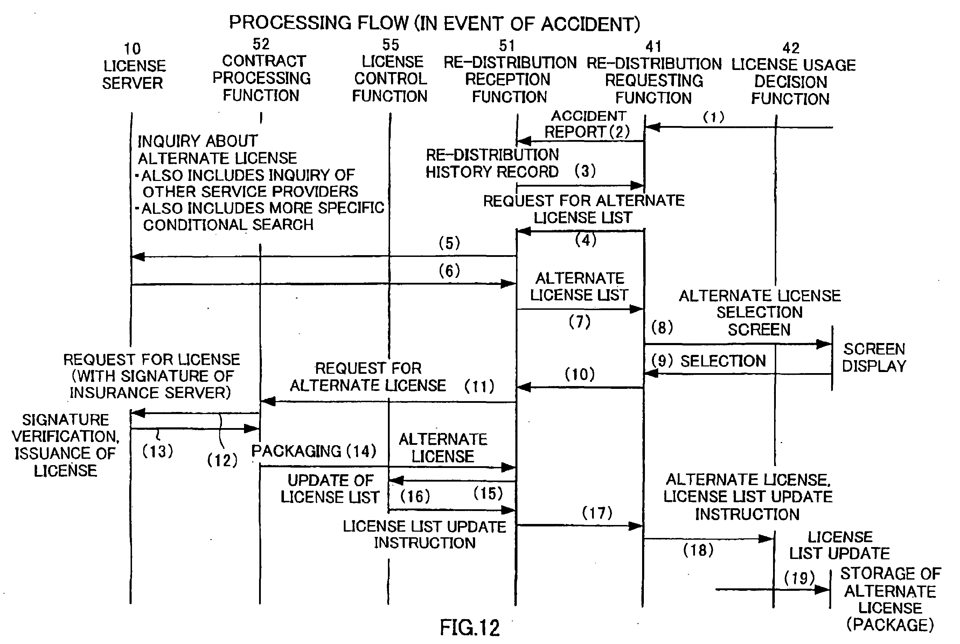

Then, the processing in the event of loss of contents or license at the user terminal 40 will be explained using FIG.12. If such an accident has occurred, the insurance service server 50 invalidates the previous license and re-distributes a new license. Furthermore, in the case where it is not possible to re-distribute the same contents due to discontinuation of the disclosure of the contents, the insurance service server 50 re-distributes a license for replacing contents to the user. The transmission route for the contents to be re-distributed may be the same as or different from that of the license to be re-distributed. Here, the transmission route will not be particularly discussed. Anyway, the re-distributed contents are not allowed to be playbacked until the re-distributed contents are stored in the storage medium 45 and the re-distribution of the license is completed.
(1) Based on the user's request for license re-distribution,
(2) the re-distribution requesting function 41 of the user terminal 40 specifies the name of the user to the re-distribution reception function 51 of the insurance service server 50 and informs it of the accident.
(3) With reference to the re-distribution history DB 53, if the re-licensing count does not exceed the upper limit on the re-licensing count of the guarantee conditions, the re-distribution reception function 51 increments the re-licensing count of the re-distribution history record by one and then inquires of the re-distribution requesting function 41 of the user terminal 40 about the license to be requested. At this time, in preparation for a case where the re-distribution of the license for the same contents is impossible, the re-distribution reception function 51 inquires about desired conditions (whether the user desires music of the same artist or music of different artists) corresponding to alternate contents as well.
(4) When there is a reply from the re-distribution requesting function 41 of the user terminal 40,
(5) the re-distribution reception function 51 inquires of the license server 10 of the license issuer whether the license for the same contents can be reissued or not. If the issuer cannot reissue the license, the re-distribution reception function 51 also inquires of other service providers. When the license cannot be reissued, the re-distribution reception function 51 more specifically searches for alternate contents which do not exceed the "upper limit of the price difference from alternate contents" specified in the guarantee conditions of the insurance contract and at the same time satisfy desired conditions of the user, and
(6) when the search result is obtained,
(7) the re-distribution reception function 51 sends the search result to the re-distribution requesting function 41 of the user terminal 40 as information on an alternate license list.
(8) Based on the information on the alternate license list, an alternate license selection screen is shown on the screen of the user terminal 40.
(9) When the user selects an alternate license from the alternate license selection screen,
(10) the information on the selected alternate license is sent to the re-distribution reception function 51 of the insurance service server 50 through the re-distribution requesting function 41,
(11) the re-distribution reception function 51 requests the alternate license from the contract processing function 52.
(12) The contract processing function 52 signs the license request for the alternate license using the private key of the insurance service provider and sends it to the license server 10.
(13) After verifying the signature of the license request using the public key of the insurance service provider, the license server 10 issues a license and sends it to the contract processing function 52 of the insurance service server 50.
   The contract processing function 52 encrypts the license issued by the license server 10 using the public key corresponding to the private key attached to the insurance policy. Furthermore, it updates the guaranteed license ID, re-licensing starting date, upper limit on the re-licensing count, etc., included in the guarantee conditions (FIG.6B) of the insurance contract and packages the encrypted license with information on these guarantee conditions.
(14) The contract processing function 52 hands over the packaged alternate license to the re-distribution reception function 51. The re-distribution reception function 51 updates the gross amount of guarantee included in the re-distribution history record (FIG.6A) of the re-distribution history DB 53 and then,
(15) hands over the packaged alternate license to the license control function 55. The license control function 55 updates the license list (FIG.7).
(16) The license control function 55 instructs updating of the license list 43 of the user terminal 40.
(17) This instruction for updating of the license list and the packaged alternate license are sent to the re-distribution requesting function 41 of the user terminal 40 through the re-distribution reception function 51,
(18) the re-distribution requesting function 41 hands over them to the license usage decision function 42,
(19) the license usage decision function 42 updates the license list 43 and stores the alternate license.

If a reply that the re-issuance of the license for the same contents is possible is obtained from the license server 10 in (6), the process moves on to (11) and the license request is handed over to the contract processing function 52 and the license request is issued from the contract processing function 52 to the license server 10 (12). Even in this case, the contract processing function 52 invalidates the previous license, requests a new license replacing the old one and the license server 10 issues a license with a different license ID attached.

In this way, this system controls a list of available licenses or a list of invalidated licenses using the insurance service server and when a license is re-distributed, it invalidates the previous license thus disabling the use of the lost contents (or contents that must have been lost). Thus, receiving re-distribution through a false accident report is meaningless, which consequently prevents abuses of insurance.

Furthermore, when the same contents as the lost contents cannot be re-distributed, the insurance service server re-distributes alternate contents and when the service provider who has distributed the contents cannot re-distribute the contents due to discontinuation of the business, etc., the insurance service server re-distributes an alternate content of another service provider to the user. Therefore, by taking out an insurance policy, the user is assured re-distribution of contents or license. The user' s right is assured even when trouble occurs with the service provider or when operation is discontinued.

Furthermore, by taking out an insurance policy, the distribution service provider can remove the sense of insecurity of the user about the remedial services in the event of loss of contents. Moreover, even when the distribution service provider cannot comply with the re-distribution of contents due to discontinuation of the business, etc., alternate contents procured from another service provider are re-distributed to the user, and therefore by taking out an insurance policy, the distribution service provider can be exempt from the responsibility for nonfulfillment of the contract.

Furthermore, since this system controls information on the insurance contract and information on the validity of the license through the insurance service server, too, even if a machine crash occurs on the user terminal and both the contents and license policy are lost, the system can re-distribute the contents and license.

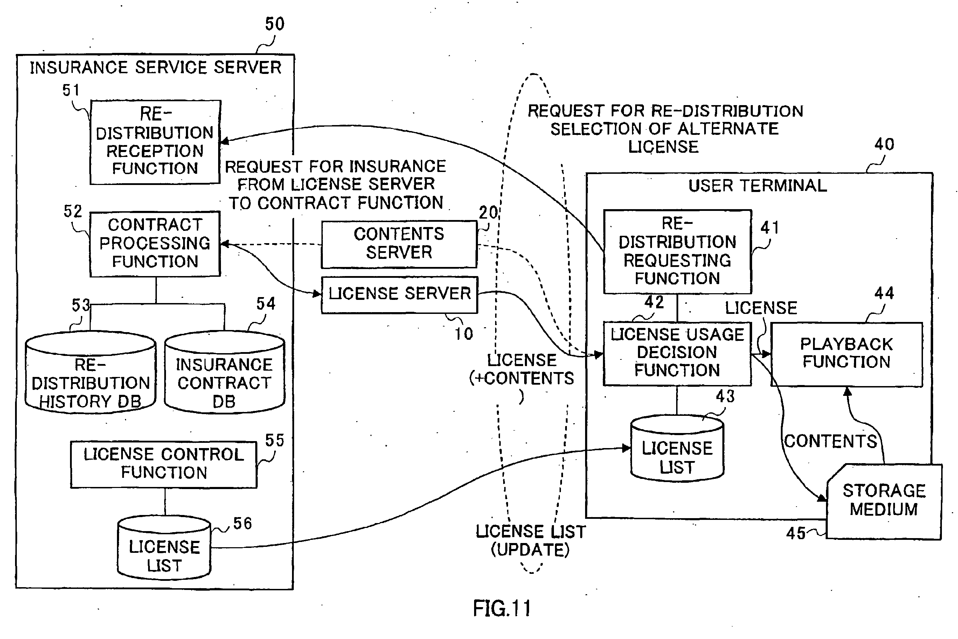

Here, as shown in FIG.3, a front-end configuration has been explained in which the user requests an initial license from the insurance service server 50 and the insurance service server 50 transmits the license request to the license server 10, but as shown in FIG.11, it is also possible to adopt a back-end configuration in which the user requests an initial license from the license server 10 and the license server 10 requests the contract processing function 52 of the insurance service server 50 to insure the license. This back-end configuration also allows re-distribution to be processed as in the case of the front-end configuration.

Furthermore, with regard to the guarantee conditions (FIG.6B) of the insurance contract, this embodiment has described the case where an insurance policy including the guarantee conditions is issued to the user terminal, attached to the license and sent to the user terminal, but when an electronic receipt is issued, it is also possible to describe it explicitly in the electronic receipt and inform the user of it. In this case, by putting the information on the guarantee conditions in a format that allows it to be saved separate from the electronic receipt, the license usage decision function of the user terminal can extract the information on the guarantee conditions from the electronic receipt and store it.

Furthermore, it is also possible to incorporate the insurance policy into the user terminal beforehand and sell the user terminal in combination with insurance.

Furthermore, the insurance contract DB can control guarantee conditions for each user and set as an upper limit on the re-licensing count not only the upper limit on the re-licensing count specified in the guarantee conditions but also an upper limit on the re-licensing count for all contents purchased by the user. For example, re-distribution may be allowed a maximum of 10 times for all contents purchased by the user, while re-distribution of the same contents may be allowed a maximum of 3 times.

Furthermore, it is also possible to modularize and exchange re-distribution history information among a plurality of insurance services, and thereby check illegal users.

Furthermore, it is also possible to provide the insurance service server 50 with a function of detecting trouble in the distribution services 1 and 2, detect the number of times service trouble occurs in each distribution service and a time required to recover the service, etc., and change the guarantee conditions (insurance premium) for each service provider based on the detection result.

Furthermore, this embodiment has described the configuration in which part of the license list controlled by the insurance service server is copied to the user terminal and the user terminal inquires of the insurance service server about the validity of the license not included in this copy, but it is also possible to construct the system in such a way that the user terminal always inquires of the insurance service server without making any copy of the license list to the user terminal.

Furthermore, to distribute a re-distributed license, etc., from the insurance service to the user, not only electronic media but also physical media such as mail can be used. Distribution using physical media can be used to send one or a plurality of contents, license, and insurance policy, and it is possible to send the contents to the address of the user after the user purchases the license, send the license to the address of the user after the user downloads the contents or send an insurance policy to the user after the user takes out the insurance policy.

Furthermore, when the insurance service server is used as the front-end (FIG.3), this embodiment has described the case where only the license is sent to the user terminal through the insurance service server, but it is also possible to send the contents to the user terminal through the insurance service server. Furthermore, the insurance service server performs conversion (packaging) for adding information on the guarantee conditions to the license, but it is also possible to carry out similar conversion on the contents. In this case, the information on the guarantee conditions is displayed when the user terminal playbacks the contents. Furthermore, this conversion need not be performed on the license or contents.

Furthermore, this embodiment has explained the insurance service server as an independent structure, but it is also possible to modularize the function of this insurance service server and incorporate it into the distribution server.

Furthermore, this embodiment has explained the case where the insurance service server is used independently of the distribution server, but it is also possible for the same carrier to operate the insurance service server and the distribution server.

Furthermore, it is also possible to adopt a configuration combining the insurance service server for insuring the license and the insurance service server for insuring the contents.

Furthermore, it is also possible to distribute a license of upgraded contents using the insurance service server of this system to the user terminal. When contents are upgraded, the distribution service provider (or the insurance service server notified from the distribution service provider) notifies it to the user and the insurance service server re-distributes the license of the upgraded contents based on the user's request.

At this time, the insurance service server 50 re-distributes the license of the upgraded contents using the same procedure as the license re-distribution procedure in FIG.12 and responds to the user's request. The insurance service server 50 controls the license corresponding to each version of contents using the re-distributionhistoryDB 53 or license list 56 to prevent duplicate distribution of the upgraded license and playback of the contents of the old version after the version upgrade, etc. Thus, the distribution service provider can delegate the servicing for the user to the insurance service server. Furthermore, the user can reliably acquire the license with the upgraded contents through the insurance service server 50.

Furthermore, when the specification of the user terminal does not conform to the standard of the contents distribution format or storage format in the distribution service (e.g., one side is CD (Compact Disc) audio and the other side is DVD (Digital Video Disc) audio, or one side is MP3 and the other side is AAC, etc.), the system having the insurance service server can also insure the storage of the contents at the user terminal through the intermediation of the insurance service.

Furthermore, it is also possible to use this system for mutual exchange of contents of different media (e.g., mutual exchange between contents downloaded using a mobile device and broadcasting contents). In such a case, an insurance server for supervising a plurality of insurance service servers is provided for each medium and the servers are connected hierarchically.

Furthermore, this embodiment has described re-distribution of contents or a license, but it is also possible to insure electronic values such as electronic money or electronic tickets, etc., and reduce the risk of loss of the electronic values by insurance.

Thus, according to this embodiment, the insurance server that guarantees re-distribution of authorized data to be distributed electronically is constructed in such a way as to insure re-distribution of the license that allows playback of the contents as authorized data and re-distribute a license issued by the distribution service provider to the user terminal in response to the request from the user who has taken out an insurance policy, and the user terminal used in an insurance system that guarantees re-distribution of authorized data distributed electronically is provided with a storage section that stores insurance policies issued by the insurance server and encrypted contents, a license usage decision section that stores licenses acquired through the insurance server and decides the validity of the license for the contents during playback of the contents, a playback section that decodes, when the license is valid, the contents using a decoding key included in the license and a re-distribution requesting section that requests, when the license or contents are lost, the insurance server to re-distribute the license or contents, and therefore this embodiment can insure re-distribution of electronically distributed contents, electronic ticket or electronic money, etc., in the event of loss thereof. The user has a tendency to hesitate the use of electronic distribution services out of the sense of insecurity about this loss, but the system of the present invention can eliminate such insecurity and promote the use of electronic distribution services.

### (Embodiment 2)

As in the case of the configuration shown in FIG. 2, an insurance system according to this embodiment is constructed of a plurality of distribution services 1 and 2 including contents servers 20 and 21 and license servers 10 and 11, a user terminal 40 made up of a PC, mobile terminal or STB, etc., an insurance service server 50 that executes an insurance service and a network 30 that connects these sections such as the Internet, mobile network and broadcasting network. This insurance system is a system made up of the insurance service server 50 which is an insurance entity, the license server 10(11) which is a distribution entity and the user terminal 40 which is the user. The contents servers 20 and 21 distribute encrypted electronic contents themselves and the license servers 10 and 11 issue a license to make the electronic contents available. The information of this license includes information on a decoding key for decrypting the encrypted electronic contents.

This system introduces a service to allow the user to receive re-distribution of purchased contents or license free of charge. However, when a free re-distribution service is introduced, the burden on the distribution service provider is increased considerably. Thus, the right to receive re-distribution is sold on a chargeable basis as "re-distribution license" and when the contents or license is lost, only the user who has the re-distribution license can receive re-distribution free of charge.

Furthermore, the system is constructed in such a way that the insurance service server 50 is provided as an independent section dedicated to processing for re-distribution and the plurality of distribution services 1 and 2 share this insurance service server 50.

As shown in FIG.3, the user terminal 40 is provided with a playback function 44 for playbacking contents stored in the storage medium 45, a license list 43 that describes information indicating the validity/invalidity of the license owned by the user, a license usage decision function 42 that decides whether the contents can be playbacked or not with reference to the license list 43 and a re-distribution requesting function 41 for requesting the insurance service server 50 to re-distribute the contents or license when lost. The re-distribution requesting function 41, license usage decision function 42 and playback function 44 are implemented by their respective predetermined processors. Furthermore, the license list 43 is data stored in a storage section such as a memory.

As shown in FIG.3, the insurance service server 50 is provided with a re-distribution reception function 51 that receives a request for re-distribution, a contract processing function 52 that makes an insurance contract with the distribution service provider or the user, an insurance contract database (DB) 54 that stores insurance contract information, a re-distribution history DB 53 that stores information on a history of re-distributions to the user, a license control function 55 that controls licenses and a license list 56 that describes information on the validity/invalidity of each license. The re-distribution reception function 51, contract processing function 52 and license control function 55 are implemented by their respective predetermined processors. Furthermore, the re-distribution history database (DB) 53 and insurance contract database (DB) 54 are constructed of storage sections such as memories and the license list 56 is data stored in a storage section such as a memory.

The respective functions of the user terminal 40 and insurance service server 50 are the functions implemented by operating a computer incorporated in the user terminal 40 or insurance service server 50 according to a program.

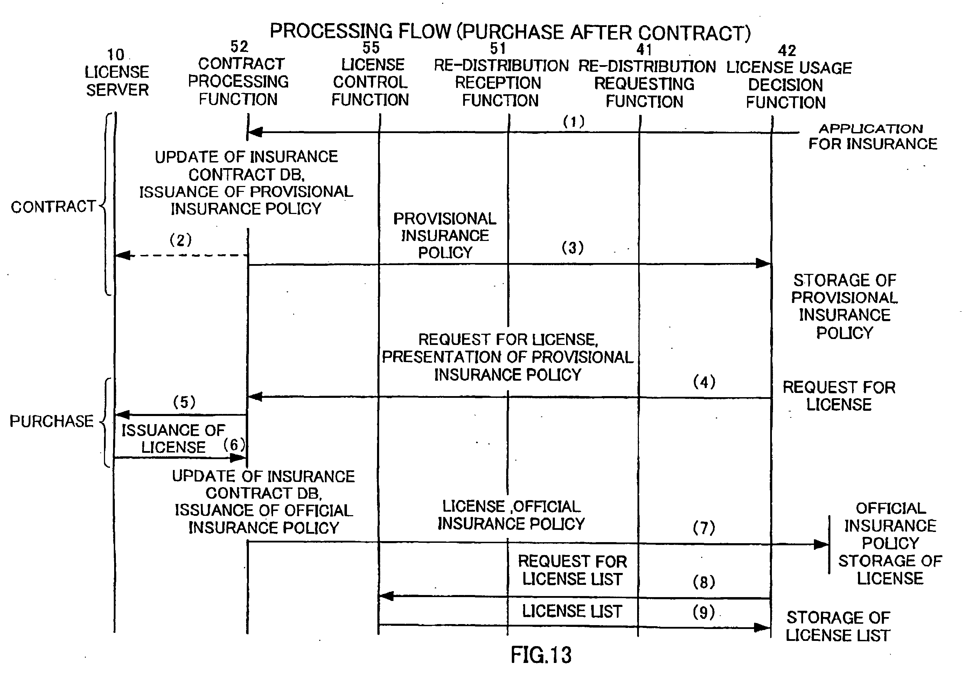

FIG.13 shows a processing flow when the distribution service provider signs an insurance contract with the insurance service server 50 in this system. This processing flow (the same will apply to the processing flow hereinafter) puts the respective functions of the insurance service server 50 and user terminal 40, and the license server 10 on vertical axes and expresses processing between the vertical axes using arrows.

As a processing flow for making an insurance contract in this insurance system, FIG.13 shows a processing flow when an insurance contract is signed between the user terminal 40 and insurance service server 50 and then the user terminal 40 purchases a license ("taking out insurance" → "license purchase").

In this processing flow,
(1) when the user terminal 40 requests an application for insurance to the contract processing function 52 of the insurance service server 50, the contract processing function 52 of the insurance service server 50 updates the insurance contract database (DB) 54 according to the application and issues a provisional insurance policy.
(2) The insurance service server 50 reports the update result of the insurance contract database (DB) 54 and result of issuance of the provisional insurance policy to the license server 10.
(3) The contract processing function 52 of the insurance service server 50 that issued the provisional insurance policy sends the issued provisional insurance policy to the license usage decision function 42 of the user terminal 40. The license usage decision function 42 that has received the provisional insurance policy stores the provisional insurance policy in a storage section, for example, the storage medium 45. The content of this provisional insurance policy is the same as that of the aforementioned insurance policy in FIG.6. However, since in this processing flow, an insurance contract is signed in a stage before the purchase of the license, the information on an "guaranteed license ID" and information on a "license decoding key" shown in FIG.6 are not described. Issuing such a provisional insurance policy means that an insurance contract has been concluded which guarantees re-distribution of the purchased contents and license from then on during the guarantee period under the guarantee conditions.
(4) When the provisional insurance policy is stored at the user terminal 40 as a result of making the insurance contract and the user terminal 40 purchases the license, the user terminal 40 sends a license request and provisional insurance policy to the contract processing function 52 of the insurance service server 50. The contract processing function 52 of the insurance service server 50 can decide based on the provisional insurance policy received from the user terminal 40 that this license request at this time is insuredwith an insurance contract.
(5) The contract processing function 52 of the insurance service server 50 that has received the license request sends the license request to the license server 10.
(6) The license server 10 that has received the license request from the insurance service server 50 issues a license and sends this license to the contract processing function 52 of the insurance service server 50. Thus, the issuance of the license by the license server 10 is carried out based on the request from the insurance service server 50 and the issued license is also sent to the insurance service server 50, and in this way a license is issued necessarily through the intermediary of the insurance service server 50. This allows the insurance service server 50 to link the purchased license to the insurance contract specified by the provisional insurance policy.
   By the way, as the method for using the insurance service server 50 as the intermediary in purchasing the license, the user terminal 40 may also send a license request and provisional insurance policy to the license server 10 and the license server 10 may inquire of the insurance service server 50 whether the provisional insurance policy has already been registered in the insurance contract database (DB) 54 or not.
(7) In FIG.13, the contract processing function 52 of the insurance service server 50 that has received the license issued by the license server 10 reissues (or updates) the "guaranteed license ID" of the provisional insurance policy and the information on the "license decoding key" as an official insurance policy and sends this official insurance policy and license (encrypted using the license decoding key) to the user terminal 40. By the way, the license decoding key can use various systems such as a public key system and common key system, etc. Thus, the official insurance policy is the data describing information (license ID, etc.) to identify the license to be insured and insurance application conditions.
   The user terminal 40 that has received the license and this insurance policy stores them in a storage section such as the storage medium 45. The storage medium 45 is designed to store contents themselves in addition to the license and official insurance policy. This makes the license re-distribution service available even when this storage medium 45 is used for other user terminals.
(8) The user terminal 40 that has received the license and the official insurance policy sends a license list request to the license control function 55 of the insurance service server 50.
(9) The license control function 55 of the insurance service server 50 that has received the license list request sends the license list describing the license ID of the license contracted in the official insurance policy to the license usage decision function 42 of the user terminal 40.

The license usage decision function 42 that has received the license list stores the license list and allows only the license specified by the valid (not invalidated) license ID written in this stored license list to be used. By the way, the license list is the data that describes the license ID as license identification information and the validity/invalidity of the license (invalidation information, etc.).

Thus, by sending the license list describing the license insured through a normal procedure by the insurance service server 50 from the insurance service server 50 to the user terminal 40 and allowing the user terminal 40 to use only the license specified by the license ID described in this license list, when the insurance service server 50 re-distributes a license in response to an illegal license re-distribution request, the license ID is not described as valid in the license list stored in the user terminal 40 which has received this license. This allows the user terminal 40 to prevent the use of the illegally re-distributed license.

Thus, in the processing flow shown in FIG.13, it is possible to carry out an insuring process before purchasing a license according to the processing steps of "request for taking out insurance (issuance of insurance policy)" → "issuance of dummy (provisional) insurance policy" → "request for license purchase and the presentation of dummy insurance policy" → "license issuance and update to/re-issuance of insurance policy (issuance of insurance policy)." With respect to the insurance contract, the insurance service server 50, which is independent of the license server 10, takes the initiative in carrying out the contract and control, and therefore the license server 10 can easily introduce a license re-distribution service without adding any complicated processing for re-distribution and at the same time provide smooth re-distribution services preventing illegal re-distributions. Furthermore, in the case of the "license issuance and update to/re-issuance of insurance policy (issuance of insurance policy)," a license list is issued and the user terminal 40 can thereby prevent the use of an illegally re-distributed license.

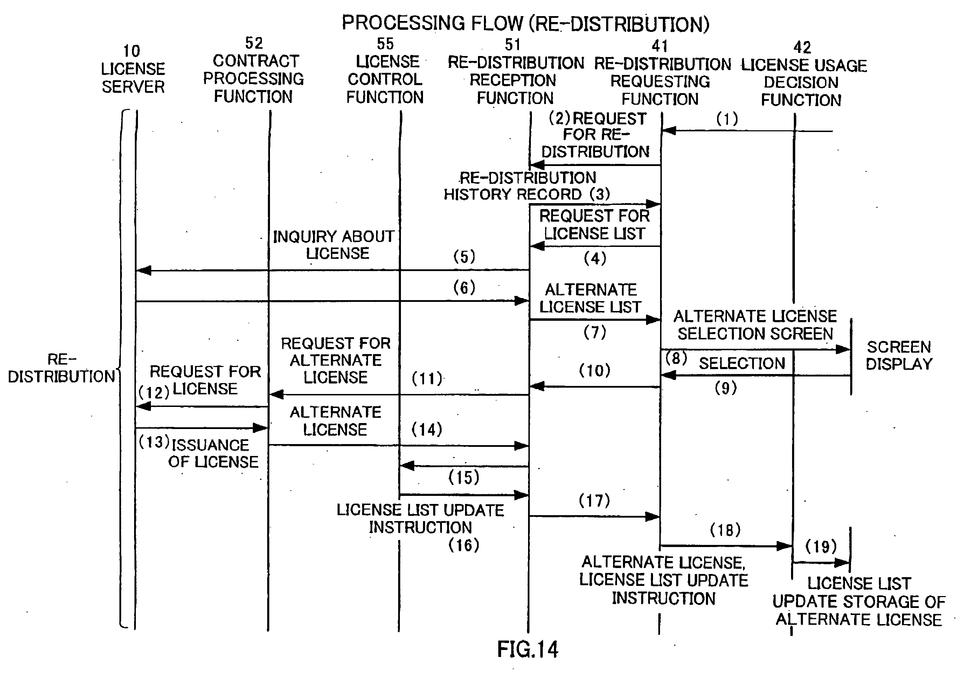

FIG.14 shows a processing flow for the user terminal 40 which has an official insurance policy, license and license list according to an insurance contract to receive re-distribution of the license based on the insurance contract.

In this processing flow,
(1) when the user inputs a re-distribution request using an input apparatus (not shown) of the user terminal 40, this request is supplied to the re-distribution requesting function 41 of the user terminal 40.
(2) The re-distribution requesting function 41 of the user terminal 40 that has received the re-distribution request sends a re-distribution request to the re-distribution reception function 51 of the insurance service server 50.
(3) The re-distribution reception function 51 of the insurance service server 50 that has received this re-distribution request from the user terminal 40 records the re-distribution history and then sends the information to the re-distribution requesting function 41 of the user terminal 40.
(4) The re-distribution requesting function 41 of the user terminal 40 that has received the recording result of the re-distribution history sends a request for a list including the license to be originally re-distributed and alternate licenses to the re-distribution reception function 51 of the insurance service server 50.
(5) The re-distribution reception function 51 of the insurance service server 50 that has received the request for this list inquires of the license server 10 whether the license server 10 provides the license to be re-distributed or not at that time.
(6) If the license server 10 that has received the inquiry about the license provides the inquired license, it sends the information to the re-distribution reception function 51 of the insurance service server 50. On the contrary, if the license server 10 does not provide the inquired license, that is, when the license server 10 cannot meet the user's request for re-distribution, for example, because the disclosure of contents whose re-distribution is requested by the user has been discontinued due to circumstances on the contents distribution service provider side or the server is down or distribution services are discontinued, the license server 10 sends a list of alternate licenses to use alternate contents as a substitute to the re-distribution reception function 51 of the insurance service server 50.
(7) The re-distribution reception function 51 of the insurance service server 50 that has received the list of the alternate licenses sends the alternate license list to the re-distribution requesting function 41 of the user terminal 40. If the license server 10 does not provide the license to be re-distributed, the insurance service server 50 inquires of other license servers (not shown) about alternate licenses, and can thereby present the list of more alternate licenses to the user terminal 40. In this case, by specifying a specific genre of the contents for the re-distribution request sent from the user terminal 40, the insurance service server 50 can narrow the alternate license search range and present alternate licenses to use contents of the genre that meets the user's preferences. Thus, the user terminal 40 always uses the insurance service server 50 as the intermediary when using re-distribution of a license, this insurance service server 50 takes the initiative in carrying out re-distribution processing according to the request for re-distribution, and it is thereby possible to search for an alternate license not only from the license server which has issued the license but also more widely from other license servers and carry out re-distribution more smoothly.
(8) The re-distribution requesting function 41 of the user terminal 40 that has received the alternate license list allows a display apparatus to display alternate licenses in the list.
(9) When the user manipulates an input apparatus (not shown) to select an alternate license of his/her preference from the alternate licenses displayed on the display apparatus, the selection result is supplied to the re-distribution requesting function 41 of the user terminal 40.
(10) The re-distribution requesting function 41 of the user terminal 40 that has received the selection result sends the selection result to the re-distribution reception function 51 of the insurance service server 50.
(11) The re-distribution reception function 51 of the insurance service server 50 that has received the selection result supplies the request for the alternate license specified by the selection result to the contract function 52.
(12) The contract processing function 52 that has received the request for the alternate license sends the alternate license request to the license server 10 that supplies the license.
(13) The license server 10 that has received the license request issues the license and sends it to the contract function 52 of the insurance service server 50.
(14) The contract function 52 of the insurance service server 50 that has received the license supplies the license to the re-distribution reception function 51 as the alternate license.
(15) The re-distribution reception function 51 that has received the alternate license informs the license control function 55 of the receipt of the alternate license.
(16) The license control function 55 supplies a license list update instruction to the re-distribution reception function 51.
(17) The re-distribution reception function 51 that has received the license list update instruction sends the alternate license and the license list update instruction to the re-distribution requesting function 41 of the user terminal 40. This means that the re-issuance of the license has been done. Thus, by carrying out steps "re-distribution request" → "confirmation of alternate condition" → "confirmation of presence/absence of requested license" → "alternate distribution in the absence of request license" according to the processing flow shown in FIG.14, smooth license (alternate license) re-distribution is carried out principally by the insurance service 50. By the way, the "re-issuance of license" in this embodiment means that a license or alternate license searched by the insurance service server 50 according to the re-distribution request is sent to the user terminal 40, but the present invention is not limited to this and it also means that a license or alternate license is issued by the license server 10 at the request of the insurance service server 50. Or it can also mean that the license list is updated based on this license or alternate license.
(18) The re-distribution reception function 51 of the insurance service server 50 supplies the received alternate license and license list update instruction to the license usage decision function 42.
(19) The license usage decision function 42 stores the received alternate license and updates the license list. When this license list is updated, the source license that served as the basis for the request for re-distribution of the license (that is, license whose data is assumed to have been lost by an accident, etc.) is invalidated and the license ID of the alternate license is newly added to the list. Thus, the use of the license which served as the basis for re-distribution is prohibited and it is thereby possible to prevent the license from being re-distributed for the purpose of illegally increasing the number (types) of licenses. Furthermore, the insurance service server 50 provided independently of the license server 10 which is the distribution service provider server carries out such license list update control ("update by insurance entity so that validity/invalidity of source license is set to an invalid state, a new license ID is issued (information indicating validity/invalidity of the new license ID is set to "valid")" → "update of user side (user terminal 40 side) list"), and it is thereby possible to easily introduce re-distribution services without adding complicated processing for re-distribution to the processing by the license server 10 when carrying out license distribution services.

Thus, in the processing flow shown in FIG.14, re-distribution is always carried out through the insurance service server 50 when a license is re-distributed and the insurance service server 50 takes the initiative in updating the license list and providing an alternate license, and can thereby smoothly re-distribute the license. The effect of using the license list is as follows. The insurance entity (insurance service 50) cannot prevent illegal acquisition (illegal re-distribution) of the license because it has difficulty in confirming the authenticity of the re-distribution request itself. But when the user terminal 40 refers to this license list to use or execute the license, it is possible to prevent illegal execution of the license. Especially, the effect of illegal execution of the alternate license (different entity) is large.

By the way, the above embodiment has described the case where a license is purchased after signing an insurance contract (FIG.13), but the present invention is not limited to this and an insurance contract can also be signed after the license is purchased ("after license purchase" → "taking out insurance").

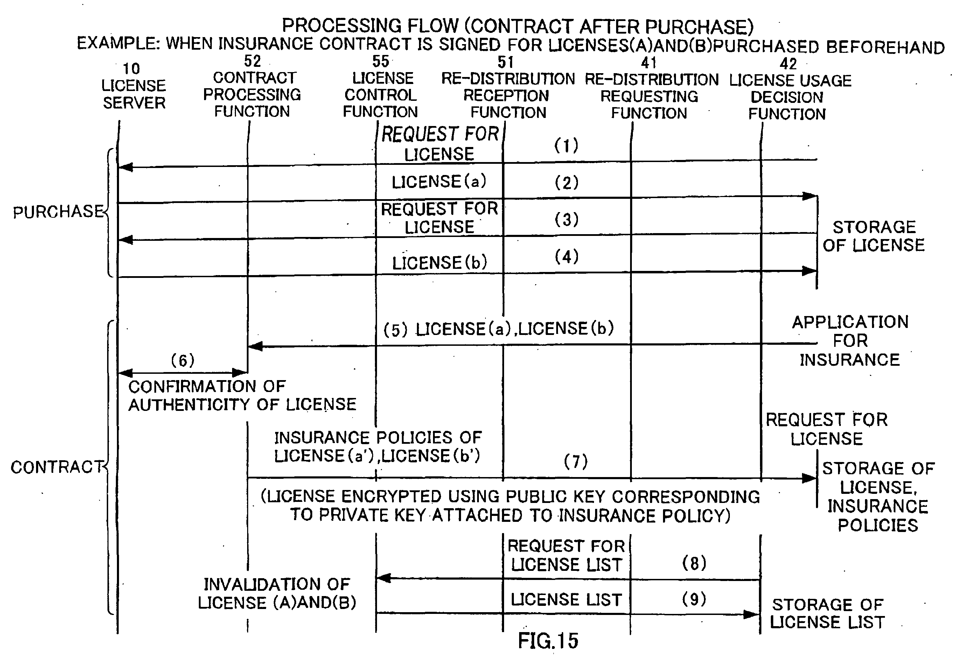

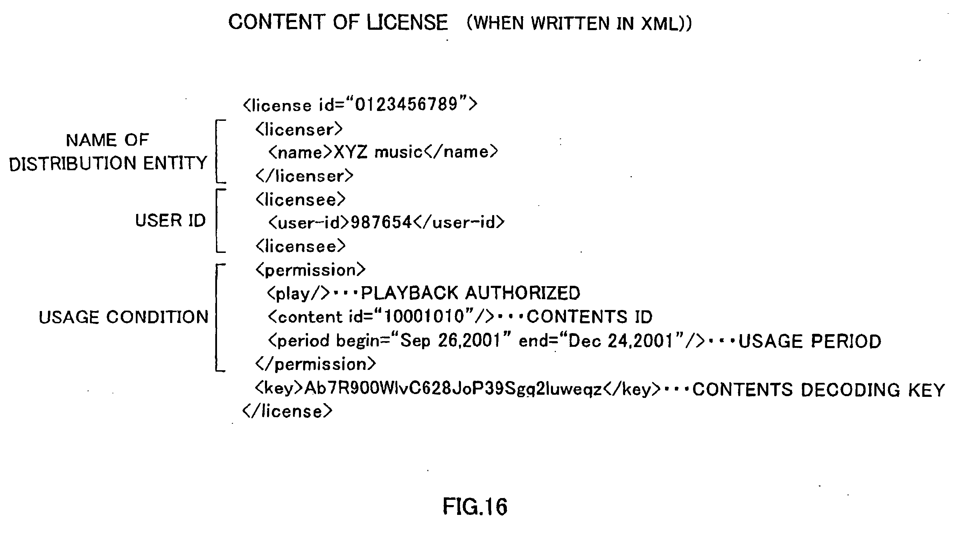

That is, FIG.15 shows a processing flow when an insurance contract is signed after the license is purchased and
(1) when a license request is sent from the user terminal 40 to the license server 10,
(2) the license server 10 sends the license (a) to the user terminal 40 in response to the license request. This license list (a) is stored in a storage section such as the storage medium 45.
(3) Furthermore, when a license request is newly sent from the user terminal 40 to the license server 10,
(4) the license server 10 sends a license (b) to the user terminal 40 in response to the license request. This license list (b) is stored in a storage section such as the storage medium 45, etc. Thus, when the license server 10 issues a license, the license server 10 stores the issued license content as license issuance information. This will be used to confirm the authenticity of the license from the insurance service server 50 when the insurance contract is signed later.
(5) Thus, when the licenses (a) and (b) are purchased through the user terminal 40, if the user terminal 40 presents the licenses (a) and (b) for the purpose of signing the insurance contract and sends a request for an application for insurance to the contract processing function 52 of the insurance service server 50,
(6) the contract processing function 52 of the insurance service server 50 inquires of the license server 10 about the authenticity of the presented licenses (a) and (b). By the way, as shown in FIG.16, the license content includes the name of a distribution entity that identifies the license server 10, user ID that identifies the user and usage conditions (playbackpermission, contents ID, usage period and contents decoding key) as information on a purchased license. By inquiring of the license server 10 about this description content, the insurance service server 50 decides the authenticity of the license based on the license issuance information stored in the license server 10. By the way, the information on the purchased license may take any form, whether the content of the license shown in FIG.16 plus dedicated data or dedicated data provided apart from the license as information on the purchased license (index file, etc.).
(7) In FIG.15, when a confirmation result that the license is the authentic one is obtained, the contract processing function 52 of the insurance service server 50 sends the insurance policy for these licenses (a) and (b) and the licenses (a) and (b) encrypted by the license decoding key (FIG.6) attached to this insurance policy (hereinafter referred to as "licenses (a') and (b')") to the user terminal 40. The insurance policy is the data describing information (license ID, etc.) to identify the insured license and describing the insurance application condition and when the license is encrypted, the insurance policy includes the license decoding key (it does not matter whether it is the public key system or common key system, etc.,). When there is a plurality of items to be insured, it is also possible to provide different keys for respective items. The user terminal 40 that has received the licenses (a') and (b') and insurance policy stores these licenses in a storage section such as the storage medium 45.
(8) The user terminal 40 that has completed the storage of the insurance policy is considered to have obtained the right to request a license list and sends a request for the license list to the license control function 55 of the insurance service server 50.
(9) The license control function 55 of the insurance service server 50 that has received the license list request sends the license list including the licenses (a') and (b') specified by the received license list request to the user terminal 40. The licenses (a) and (b) included in this license list are regarded as invalid.

Thus, in the processing flow shown in FIG.15, it is possible to carry out insuring processing after a license is purchased ("after license purchase" → "taking out insurance"). Then, when insuring processing after the license purchase is performed according to the processing steps of "presentation of purchased license" → "license authenticity confirmation" → "insurance policy issuance," it is possible to provide a smooth re-distribution service which prevents illegal re-distribution. Furthermore, by issuing a license list at the time of "insurance policy issuance, " it is possible to prevent the use of an illegally re-distributed license when the user terminal 40 uses contents based on the re-distributed license.

In the case where the insuring processing is performed after the purchase of a license as shown in FIG.15, the insurance service server 50, which is independent of the license server 10, takes the initiative in making the insurance contract and control, and can thereby easily introduce a license re-distribution service and provide a smooth re-distribution service which prevents illegal re-distribution. In the processing flow shown in FIG. 15, the case where the request for purchasing a license from the user 40 is directly sent to the license server (distribution server) 10 has been described, but the present invention is not limited to this and the request may also be sent from the user terminal 40 to the license server 10 through various entities.

Furthermore, the above-described embodiment has described the case where an insurance contract is signed before the license purchasing process or an insurance contract is signed after the license purchasing process, but the present invention is not limited to this and the license purchasing process and signing of the insurance contract can be performed simultaneously. In this case, the issuance order for issuing an insurance policy that specifies the issuance of the license and license to be insured can be determined arbitrarily, whichever comes first. In this case, the timing of issuing the license list may be before or after the issuance of the license and issuance of the insurance policy, and the order in which the license, insurance policy and license list are issued is not particularly limited.

Furthermore the above-described embodiment has described the case of purchasing a license to use contents, but the present invention is not limited to this and the present invention is also applicable to the case where contents are provided without using any license. In this case, the contents server 20 may be used instead of the license server 10 in FIG.13 to FIG.15 and the contents maybe provided and re-distributed inplace of the license. In this case, a contents list describing available contents is provided from the insurance service server 50 to the user terminal 40 and the user terminal 40 is allowed to use only contents described as valid in this contents list, and it is thereby possible to prohibit the use of illegally re-distributed contents. The contents list that replaces the license list describes a contents ID instead of the license ID which is license identification information. Furthermore, as the information to specify the insurance target described in the insurance policy, the contents ID is described instead of the license ID.

As is apparent from the above explanations, when an electronically distributed license or contents are lost by an accident or by mistake, the insurance system of this embodiment can assure re-distribution thereof. The user has a tendency to hesitate to use electronic distribution services out of the sense of insecurity about this loss, but the insurance system of this embodiment can eliminate such insecurity and promote the use of electronic distribution services.

Furthermore, when a license is re-distributed, the system of the present invention invalidates previous licenses, and can thereby exclude illegal use of the system.

Furthermore, the distribution service provider can secure reliability of the user on services provided using this system without bearing large burden.

Furthermore, the distribution service provider can also use this system to provide services for the user when a distribution format or storage format is changed or contents are upgraded.

Thus, even if the user erases music contents stored in a storage medium by mistake or music contents are lost by a machine crash, the insurance system of this embodiment can use remedial means such as re-distribution of a license or an alternate license. Thus, the user need not purchase the music contents again, eradicating the sense of insecurity about services of electronically distributing contents, etc.

Furthermore, compared to the case where a contents distribution service provider executes re-distribution of contents or a license based on the user's request, the contents distribution service provider need not develop or introduce any special subsystem for re-distribution, which eliminates the need for financing therefor.

Furthermore, it is practically difficult to certify the loss of contents or a license and it is not possible to discern between truth and falsehood of an accident report by the user. On the contrary, issuing a license list to make it difficult to use illegally re-distributed licenses or contents can prevent frequent abuses of re-distribution.

Furthermore, when the contents distribution service provider cannot meet the request for the re-distribution by the user because, for example, the disclosure of contents whose re-distribution is requested by the user has been discontinued because of circumstances on the contents distribution service provider side or the server is down or distribution services are discontinued, by re-distributing an alternate contents or alternate license, it is also possible to prevent non-fulfillment by the carrier side of a contents sale contract concluded contingent upon re-distribution.

This application is based on the Japanese Patent Application No. 2001-160803 filed on May 29, 2001, entire content of which is expressly incorporated by reference herein.

### Industrial Applicability

The present invention is preferably used for a system that distributes contents or a license for using contents through a network.

## Claims

1. An insurance system for guaranteeing re-distribution of electronically distributed authorized data, which generates the right to receive re-distribution contingent upon taking out an insurance policy.

2. The insurance system according to claim 1, wherein said authorized data is a license for authorizing playback of contents.

3. The insurance system according to claim 2, wherein a server of a distribution service provider that distributes said contents, an insurance server of an insurance service provider that guarantees re-distribution of said contents and a user terminal of a user who uses the distribution service of said contents are connected through a network.

4. The insurance system according to claim 3, wherein said insurance service provider guarantees re-distribution of said contents and a license for said contents for an insured user.

5. The insurance system according to claim 4, wherein said insurance service provider issues an insurance policy to the insured user.

6. The insurance system according to claim 5, wherein sa id insurance policy includes a private key to decode data encrypted using a public key and distributed by said insurance server.

7. The insurance system according to claim 5, wherein said insurance server distributes the insured user said insurance policy.

8. The insurance system according to claim 6, wherein said insurance server encrypts the license issued by the server of said distribution service provider using said public key and distributes the license to the user terminal of the insured user.

9. The insurance system according to claim 3, wherein said insurance server re-distributes said license to said user terminal in response to a request from the user terminal of the insured user.

10. The insurance system according to claim 9, wherein said insurance server re-distributes an alternate license for authorizing playback of alternate contents in substitution for the insured contents to said user terminal with the consent of the user.

11. The insurance system according to claim 10, wherein said insurance server searches for said alternate contents from among contents provided by a distribution service provider different from the contents distributor.

12. The insurance system according to claim 9 or 10, wherein said insurance server records a re-distribution history of said license re-distributed to the user and determines guarantee conditions concerning the re-distribution based on said re-distribution history.

13. The insurance system according to claim 12, wherein said insurance server determines an upper limit on the number of re-distributions of the same contents based on said re-distribution history.

14. The insurance system according to claim 12, wherein said insurance server determines an upper limit on the total number of re-distributions for all contents based on said re-distribution history.

15. The insurance system according to claim 12, wherein said insurance server determines a pre-period until said re-distribution starts based on said re-distribution history.

16. The insurance system according to claim 12, wherein said insurance server determines a guarantee period based on said re-distribution history.

17. The insurance system according to claim 12, wherein said insurance server determines an upper limit on a price difference between insured contents and alternate contents based on said re-distribution history.

18. The insurance system according to claim 12, wherein said insurance server exchanges said re-distribution history with other insurance servers.

19. The insurance system according to claim 3, wherein said insurance service provider guarantees the right of the user in the event that said distribution service provider has trouble or discontinues operations based on the insurance policy that said distribution service provider has taken out.

20. The insurance system according to claim 3, wherein said insurance service provider guarantees the right of the user to receive re-distribution when said distribution service provider upgrades the distributed contents based on the insurance policy that said distribution service provider has taken out.

21. The insurance system according to claim 19, wherein said insurance server detects the number of times trouble occurs in the service provided by said distribution service provider and the time until the service is recovered and determines guarantee conditions for said distribution service provider based on the detection result.

22. The insurance system according to claim 4, wherein said insurance server controls a license list that describes licenses available to the user terminal.

23. The insurance system according to claim 22, wherein said license list describes invalidated licenses.

24. The insurance system according to claim 22, wherein part of said license list is copied and retained by said user terminal and said user terminal refers to said copy when contents are playbacked to determine the validity of the license concerning said contents.

25. The insurance system according to claim 24, wherein said user terminal inquires of said insurance server about the validity of the license that cannot be decided from said copy.

26. The insurance system according to claim 22, wherein said user terminal inquires of said insurance server about the validity of the license concerning said contents every time the contents are playbacked.

27. The insurance system according to claim 3, wherein said insurance server accepts the use of said distribution service by an insured user and distributes the license issued from the server of the distribution service provider to said user terminal.

28. The insurance system according to claim 27, wherein said insurance server distributes the contents distributed from the server of said distribution service provider together to said user terminal.

29. The insurance system according to claim 27 or 28, wherein said insurance server adds information on the guarantee conditions of the guaranteed re-distribution to said license or contents distributed to said user terminal.

30. The insurance system according to claim 27 or 28, wherein said insurance server adds information on the guarantee conditions of the guaranteed re-distribution to an electronic receipt of said contents issued to said user terminal.

31. The insurance system according to claim 3, wherein the server of the distribution service provider that has accepted the use of said distribution service by the user requests said insurance server to add insurance and said insurance server guarantees re-distribution of contents distributed in response thereto.

32. The insurance system according to claim 4, wherein a plurality of said insurance servers guarantee said license and said contents separately.

33. The insurance system according to claim 3, wherein a plurality of said insurance servers that guarantees re-distribution of contents distributed through different networks work in cooperation with each other.

34. An insurance server for guaranteeing re-distribution of electronically distributed authorized data, which guarantees re-distribution of a license for authorizing playback of contents as said authorized data and re-distributes said license issued by a distribution service provider to a user terminal of an insured user at the request of said insured user.

35. The insurance server according to claim 34, comprising:
a contract processing section that makes an insurance contract;
an insurance contract database that stores a record of an insurance contract;
a license control section that controls a license available to said user terminal based on a license list;
a re-distribution reception section that receives a request for re-distribution from said user terminal; and
a re-distribution history database that stores a history of the re-distribution to the user terminal.

36. The insurance server according to claim 35, wherein said contract processing section makes an insurance contract with the user and the distribution service provider.

37. The insurance server according to claim 35, wherein said re-distribution reception section has a function of searching for alternate contents in substitution for the insured contents.

38. The insurance server according to claim 35, wherein said contract processing section generates a pair of a public key and private key every time an insurance contract with the user is concluded and distributes an insurance policy including said private key to the user terminal of said user.

39. The insurance server according to claim 38, wherein said contract processing section encrypts the license of the distributed contents acquired from the server of the distribution service provider using said public key and distributes the license to the user terminal of said user.

40. The insurance server according to claim 35, wherein guarantee conditions are controlled for each user according to said insurance contract database.

41. The insurance server according to claim 36, comprising a detection section that detects the number of times trouble occurs in the service provided by said distribution service provider and/or a time until recovery thereof, wherein said contract processing section determines guarantee conditions for said distribution service provider based on the detection result of said detection section.

42. A user terminal used for an insurance system that guarantees re-distribution of electronically distributed authorized data, comprising:
a storage section that stores an insurance policy issued by an insurance server and encrypted contents;
a license usage decision section that stores the license acquired through said insurance server and decides the validity of the license for said contents during playback of said contents;
a playback section that decodes said contents using a decoding key included in said license when said license is valid; and
are-distributionrequestingsectionthatrequests, in the event of loss of said license or said contents, said insurance server to re-distribute said license or said contents.

43. The user terminal according to claim 42, comprising a license list for the own terminal that stores part of data of a license list stored in said insurance server, wherein said license usage decision section refers to said license list for the own terminal, decides the validity of the license and inquires, when said validity cannot be decided from said license list for the own terminal, of said insurance server about the validity of the license.

44. The user terminal according to claim 42, wherein when the validity of the license is decided, said license usage decision section inquires of said insurance server about the validity of all the licenses.

45. A server of a distribution service provider used for an insurance system that guarantees re-distribution of electronically distributed authorized data, which incorporates the function of the insurance server according to any one of claims 34 to 41.

46. An insurance system comprising:
a distribution service provider server that issues a license for authorizing the use of contents;
a user terminal that uses contents based on said issued license; and
an insurance server that guarantees re-issuance of said license.

47. An insurance system comprising:
a distribution service provider server that issues a license for authorizing the use of contents;
a user terminal that uses contents based on said issued license; and
an insurance server that guarantees re-issuance of said license, wherein a request for the re-issuance of said license is sent to said distribution service provider server through said insurance server.

48. The insurance system according to claim 47, wherein said insurance server decides whether the license to be reissued may or may not be issued based on said request for re-issuance and issues, based on this decision result, said license to be reissued or an alternate license for using other alternate contents according to said request for re-issuance.

49. An insurance system comprising:
a distribution service provider server that issues a license for authorizing the use of contents in response to the purchase processing thereof;
a user terminal that uses contents based on said issued license;
an insurance server that guarantees re-issuance of said license based on predetermined insuring processing,
wherein said insurance server confirms the authenticity of purchased information based on the purchased information of said license and carries out said insuring processing based on this confirmation result.

50. The insurance system according to claim 49, wherein said insurance server issues insurance policy information that guarantees re-issuance of said license in said insuring processing.

51. The insurance system according to claim 49, wherein said insurance server issues license list information showing a license available to the insurer of the insurance in said insuring processing.

52. An insurance system comprising:
a distribution service provider server that issues a license for authorizing the use of contents in response to purchasing processing thereof;
a user terminal that uses contents based on said issued license; and
an insurance server that guarantees re-issuance of said license based on predetermined insuring processing,
wherein in said insuring processing, said insurance server issues provisional insurance policy information that guarantees re-issuance of said license and then issues said license based on a request for purchasing said license and the presentation of said issued provisional insurance policy information, updates said provisional insurance policy information in response to the issuance of this license and thereby issues official insurance policy information.

53. The insurance system according to claim 52, wherein in said processing of issuing said official insurance policy information, said insurance server issues license list information indicating a license available to the insurer of the insurance.

54. An insurance system comprising:
a distribution service provider server that issues a license for authorizing the use of contents;
a user terminal that uses contents based on said issued license; and
an insurance server that guarantees re-issuance of said license based on predetermined insuring processing,
wherein said insurance server issues insurance policy information that specifies a license for which said re-issuance is guaranteed.

55. The insurance system according to claim 54, wherein said insurance server issues license list information indicating a license available to the insurer of said insurance.

56. An insurance system comprising:
a distribution service provider server that issues a license for authorizing the use of contents;
a user terminal that uses contents based on said issued license; and
an insurance server that guarantees re-issuance of said license based on predetermined insuring processing,
wherein said insurance server issues as information for guaranteeing re-issuance of said license, insurance policy information including information specifying a license to be guaranteed and information indicating conditions under which the guarantee is applied based on said insuring processing.

57. The insurance system according to claim 56, wherein said insurance policy information includes a decoding key for decrypting said license to be guaranteed.

58. An insurance system comprising:
a distribution service provider server that issues a license for authorizing the use of contents;
a user terminal that uses contents based on said issued license; and
an insurance server that guarantees re-issuance of said license based on predetermined insuring processing,
wherein said insurance server issues license list information including identification information on a license available to the insurer of said license and information on the validity/invalidity of this license.

59. The insurance system according to claim 58, wherein said insurance server invalidates said license of said license list information based on re-issuance of said license and adds new identification information corresponding to said reissued license to said license list information as valid information.

60. The insurance system according to claim 58 or 59, wherein said user terminal prohibits the execution of invalid license according to said license list information.

61. An insurance system comprising:
a distribution service provider server that provides contents;
a user terminal that uses said distributed contents; and
an insurance server that guarantees re-distribution of said contents.

62. An insurance system comprising:
a distribution service provider server that distributes contents;
a user terminal that uses said distributed contents; and
an insurance server that guarantees re-distribution of said contents, wherein a request for re-distribution of said contents is sent to said distribution service provider server through said insurance server.

63. The insurance system according to claim 62, wherein said insurance server decides whether the contents to be re-distributed may or may not be distributed based on said request for re-distribution and based on this decision result, distributes said contents to be re-distributed or other alternate contents according to said request for re-distribution.

64. An insurance system comprising:
a distribution service provider server that distributes contents according to purchasing processing thereof;
a user terminal that uses said distributed contents; and
an insurance server that guarantees re-distribution of said contents based on predetermined insuring processing, wherein said insurance server confirms the authenticity of purchased information based on the purchased information of said contents and carries out said insuring processing based on this confirmation result.

65. The insurance system according to claim 64, wherein said insurance server issues insurance policy information for guaranteeing re-distribution of said contents in said insuring processing.

66. The insurance system according to claim 64, wherein said insurance server issues contents list information indicating contents available to the insurer of the insurance in said insuring processing.

67. An insurance system comprising:
a distribution service provider server that distributes contents according to purchasing processing thereof;
a user terminal that uses said distributed contents; and
an insurance server that guarantees re-distribution of said contents based on predetermined insuring processing, wherein in said insuring processing, said insurance server issues provisional insurance policy information for guaranteeing re-distribution of said contents and then distributes said contents based on a request for purchasing said contents and the presentation of the information on said issued provisional insurance policy, updates said provisional insurance policy information in response to this distribution of contents and thereby issues official insurance policy information.

68. The insurance system according to claim 67, wherein in the processing of issuing said insurance policy information, said insurance server issues contents list information indicating contents available to the insurer of the insurance.

69. An insurance system comprising:
a distribution service provider server that distributes contents;
a user terminal that uses said distributed contents; and
aninsuranceserverthatguaranteesre-distribution of said contents based on predetermined insuring processing, wherein said insurance server issues insurance policy information that specifies contents for which said re-distribution is guaranteed.

70. The insurance system according to claim 69, wherein said insurance server issues contents list information indicating contents available to the insurer of said license.

71. An insurance system comprising:
a distribution service provider server that distributes contents;
a user terminal that uses said distributed contents; and
an insurance server that guarantees re-distribution of said contents based on predetermined insuring processing, wherein said insurance server issues as information for guaranteeing re-distribution of said contents, insurance policy information including information specifying contents to be guaranteed and information indicating conditions under which the guarantee is applied based on said insuring processing.

72. The insurance system according to claim 71, wherein said insurance policy information includes a decoding key for decrypting said contents to be guaranteed.

73. An insurance system comprising:
a distribution service provider server for distributing contents;
a user terminal that uses said distributed contents; and
an insurance server that guarantees re-distribution of said contents based on predetermined insuring processing, wherein said insurance server issues contents list information including identification information of contents available to the insurer of said license and information on the validity/in validity of these contents.

74. The insurance system according to claim 73, wherein said insurance server invalidates said contents of said contents list information based on the execution of re-distribution of said contents and adds new identification information corresponding to said re-distributed contents to said contents list information as valid information.

75. The insurance system according to claim 73 or 74, wherein said user terminal prohibits the use of invalid contents in said contents list information.

76. An insurance server of an insurance system that guarantees re-issuance of a license for authorizing the use of contents issued by a distribution service provider server, which supplies a request for re-issuance of said license supplied from said user terminal to said distribution service provider server.

77. The insurance server according to claim 76, which decides whether the license to be reissued may or may not be issued based on said request for re-issuance and based on this decision result, issues said license to be reissued or an alternate license for using other alternate contents according to said request for re-issuance.

78. An insurance server of an insurance system that guarantees re-issuance of a license for authorizing the use of contents issued by a distribution service provider server according to predetermined purchasing processing based on predetermined insuring processing, which confirms the authenticity of purchased information based on the purchased information of said license and carries out said insuring processing based on this confirmation result.

79. An insurance server in an insurance system that guarantees re-issuance of a license for authorizing the use of contents issued by a distribution service provider server according to predetermined purchasing processing basedonpredeterminedinsuring processing,whichissues, in said insuring processing, provisional insurance policy information for guaranteeing re-issuance of said license, then issues said license based on a request for purchasing of said license and the presentation of said issued provisional insurance policy information, updates said provisional insurance policy information in response to the issuance of this license and thereby issues official insurance policy information.

80. An insurance server in an insurance system that guarantees re-issuance of a license for authorizing the use of contents issued by a distribution service provider server, which issues insurance policy information that specifies a license for which said re-issuance is guaranteed.

81. An insurance server in an insurance system that guarantees re-issuance of a license for authorizing the use of contents issued by a distribution service provider server ba sed on predetermined insuring processing, which issues as information for guaranteeing re-issuance of said license, insurance policy information including information specifying a license to be guaranteed and information indicating conditions under which the guarantee is applied based on said insuring processing.

82. An insurance server in an insurance system that guarantees re-issuance of a license for authorizing the use of contents issued by a distribution service provider server based on predetermined insuring processing, which issues identification information on a license available to the insurer of said license and license list information including information on the validity/invalidity of this license.

83. An insurance server in an insurance system that guarantees re-distribution of contents distributed from a distribution service provider server, which supplies a request for re-distribution of said contents supplied from said user terminal to said distribution service provider server.

84. The insurance server according to claim 83, which decides whether contents to be re-distributed may or may not be distributed based on said request for re-distribution and based on this decision result, distributes said contents to be re-distributed or other alternate contents according to said request for re-distribution.

85. An insurance server in an insurance system that guarantees re-distribution of contents distributed from a distribution service provider server according to predetermined purchasing processing based on predetermined insuring processing, which confirms the authenticity of purchased information based on the purchased information of said contents and carries out said insuring processing based on this confirmation result.

86. An insurance server in an insurance system that guarantees re-distribution of contents distributed from a distribution service provider server according to predetermined purchasing processing based on predetermined insuring processing, which issues, in said insuring processing, provisional insurance policy information for guaranteeing re-distribution of said contents, then distributes said contents based on a request for purchasing said contents and the presentation of said issued provisional insurance policy information, updates said provisional insurance policy information in response to this distribution of contents and thereby issues official insurance policy information.

87. An insurance server in an insurance system that guarantees re-distribution of contents distributed from a distribution service provider server, which issues insurance policy information specifying contents for which said re-distribution is guaranteed.

88. An insurance server in an insurance system that guarantees re-distribution of contents distributed from a distribution service provider server based on predetermined insuring processing, which issues as information for guaranteeing re-distribution of said contents, insurance policy information including information specifying contents to be guaranteed and information indicating conditions under which the guarantee is applied based on said insuring processing.

89. An insurance server in an insurance system that guarantees re-distribution of contents distributed from a distribution service provider server based on predetermined insuring processing, which issues contents list information including identification information on contents available to the insurer of said license and information on the validity/invalidity of the contents.

90. A distribution service provider server that issues license for authorizing the use of contents, which issues a license based on a request for issuing the license from an insurance server that guarantees re-issuance of said license and returning this issued license to said insurance server.

91. A distribution service provider server that provides contents, which returns said contents to said insurance server based on a request for contents from an insurance server that guarantees re-distribution of said contents.

92. A user terminal that uses contents based on a license for authorizing the use of said contents issued by a distribution service provider server, which carries out insuring processing with an insurance server that guarantees re-issuance of said license and uses the contents based on list information of said license supplied from said insurance server according to said insuring processing.

93. A user terminal that uses contents provided from a distribution service provider server, which carries out insuring processing with an insurance server that guarantees re-distribution of said contents and uses the contents based on list information of available contents supplied from said insurance server according to said insuring processing.

94. A processing program executed by an insurance server in an insurance system that guarantees re-issuance of a license for authorizing the use of contents issued by a distribution service provider server, comprising a re-issuance requesting step of supplying a request for re-issuance of said license supplied from said user terminal to said distribution service provider server.

95. The processing program according to claim 94, comprising:
a decision step of deciding whether a license to be reissued may or may not be issued based on said request for re-issuance; and
an issuance step of issuing, based on this decision result, said license to be reissued or an alternate license for using other alternate contents according to said request for re-issuance.

96. A processing program executed by an insurance server in an insurance system that guarantees re-issuance of a license for authorizing the use of contents issued by a distribution service provider server according to predetermined purchasing processing based on predetermined insuring processing, comprising:
a confirmation step of confirming the authenticity of purchased information based on the purchased information of said license; and
an insuring processing step of carrying out said insuring processing based on this confirmation result.

97. A processing program executed by an insurance server in an insurance system that guarantees re-issuance of a license for authorizing the use of contents issued by a distribution service provider server according to predetermined purchasing processing based on predetermined insuring processing, comprising:
a provisional issuance step of issuing provisional insurance policy information for guaranteeing re-issuance of said license in said insuring processing; and
an official issuance step of issuing said license based on a request for purchasing said license and the presentation of said issued provisional insurance policy information, updating said provisional insurance policy information in response to the issuance of this license and thereby issuing official insurance policy information.

98. A processing program executed by an insurance server in an insurance system that guarantees re-issuance of a license for authorizing the use of contents issued by a distribution service provider server, comprising an issuance step of issuing insurance policy information that specifies a license for which said re-issuance is guaranteed.

99. A processing program executed by an insurance server in an insurance system that guarantees re-issuance of a license for authorizing the use of contents issued by a distribution service provider server based on predetermined insuring processing, comprising an issuance step of issuing as information for guaranteeing re-issuance of said license, insurance policy information including information specifying a license to be guaranteed and information indicating conditions under which the guarantee is applied based on said insuring processing.

100. A processing program executed by an insurance server in an insurance system that guarantees re-issuance of a license for authorizing the use of contents issued by a distribution service provider server based on predetermined insuring processing, comprising an issuance step of issuing identification information on a license available to the insurer of said license and license list information including information on the validity/invalidity of this license.

101. A processing program executed by an insurance server in an insurance system that guarantees re-distribution of contents distributed from a distribution service provider server, comprising a supply step of supplying a request for re-distribution of said contents supplied from said user terminal to said distribution service provider server.

102. The processing program according to claim 100, comprising:
a decision step of deciding whether the contents to be re-distributed may or may not be distributed based on said request for re-distribution; and
a distribution step of distributing, based on this decision result, said contents to be re-distributed or other alternate contents according to said request for re-distribution.

103. A processing program executed by an insurance server in an insurance system that guarantees re-distribution of contents distributed from a distribution service provider server according to predetermined purchasing processing based on predetermined insuring processing, comprising:
a confirmation step of confirming the authenticity of purchased information based on the purchased information of said contents; and
an insuring step of carrying out said insuring processing based on this confirmation result.

104. A processing program executed by an insurance server in an insurance system that guarantees re-distribution of contents distributed from a distribution service provider server according to predetermined purchasing processing based on predetermined insuring processing, comprising:
a provisional issuance step of issuing provisional insurance policy information for guaranteeing re-distribution of said contents in said insuring processing in said insuring processing; and
an official issuance step of distributing said contents based on a request for purchasing said contents and the presentation of said issued provisional insurance policy information, updating said provisional insurance policy information in response to this distribution of contents and thereby issuing official insurance policy information.

105. A processing program executed by an insurance server in an insurance system that guarantees re-distribution of contents distributed from a distribution service provider server, comprising an issuance step of issuing insurance policy information that specifies contents for which said re-distribution is guaranteed.

106. A processing program executed by an insurance server in an insurance system that guarantees re-distribution of contents distributed from a distribution service provider server based on predetermined insuring processing, comprising an issuance step of issuing as information for guaranteeing re-distribution of said contents, insurance policy information including information specifying the contents to be guaranteed and information indicating conditions under which the guarantee is applied based on said insuring processing.

107. A processing program executed by an insurance server in an insurance system that guarantees re-distribution of contents distributed from a distribution service provider server based on predetermined insuring processing, comprising an issuance step of issuing contents list information including information indicating identification information of contents available to the insurer of said license and the validity/invalidity of the contents.

108. A processing program executed by a distribution service provider server that issues a license for authorizing the use of contents, comprising:
an issuance step of issuing a license based on a request for issuance of a license from an insurance server that guarantees re-issuance of said license; and
a returning step of returning the issued license to said insurance server.

109. A processing program executed by a distribution service provider server that distributes contents, comprising a returning step of returning said contents to an insurance server based on a request for said contents from said insurance server that guarantees re-distribution of said contents.

110. A processing program executed by a user terminal that uses contents based on a license for authorizing the use of said contents issued by a distribution service provider server, comprising:
an insuring processing step of carrying out insuring processing with an insurance server that guarantees re-issuance of said license; and
a contents using step of using contents based on list information of said license supplied from said insurance server according to said insuring processing.

111. Aprocessingprogramexecutedby a user terminal that uses contents distributed from a distribution service provider server, comprising:
an insuring processing step of carrying out insuring processing with an insurance server that guarantees re-distribution of said contents; and
a contents using step of using contents based on list information of available contents supplied from said insurance server according to said insuring processing.

## Amended claims

### Amended claims under Art. 19.1 PCT

1. (Deleted)

2. (Deleted)

3. (Deleted)

4. (Deleted)

5. (Deleted)

6. (Deleted)

7. (Deleted)

8. (Deleted)

9. (Deleted)

10. (Deleted)

11. (Deleted)

12. (Deleted)

13. (Amended) An insurance system for guaranteeing re-distribution of license data for authorizing playback of contents by a user terminal, comprising:
a distribution service provider server that distributes said license data;
a user terminal of a user who uses a distribution service of said license data; and
an insurance server that guarantees re-distribution of said contents to said user terminal,
wherein said insurance server comprising:
an insurance contract database that stores the content of the insurance contract;
a re-distribution request reception section that receives a request for re-distribution of said license data from said user terminal and decides whether or not to authorize the re-distribution based on a past re-distribution count and the content of said insurance contract;
a re-distribution section that re-distributes said license data based on the decision result of said re-distribution;
a history information storage section that stores said re-distribution count as re-distribution history information; and
a contract processing section that decides an upper limit on the re-distribution count of license data for the same contents based on said re-distribution history information.

14. (Amended) The insurance system according to claim 13, wherein said contract processing section determines an upper limit on the total re-distribution count for license data of all contents based on said re-distribution history information.

15. (Amended) The insurance system according to claim 13, wherein said contract processing section determines a pre-period until said re-distribution is started based on said re-distribution history.

16. (Amended) The insurance system according to claim 13, wherein said contract processing section determines the guarantee period based on said re-distribution history.

17. (Amended) The insurance system according to claim 13, wherein said contract processing section determines an upper limit on a price difference between the guaranteed contents and alternate contents that replace the guaranteed contents based on said re-distribution history.

18. (Deleted)

19. (Amended) An insurance system for guaranteeing re-distribution of license data for authorizing playback of contents by a user terminal, comprising:
a distribution service provider server that distributes said license data;
a user terminal of a user who uses distribution service of said license data; and
aninsuranceserverthatguaranteesre-distribution of said contents to said user terminal,
wherein said insurance server comprising:
an insurance contract database that stores the content of the insurance contract as a result of insuring processing; and
a contract processing section that executes, in the event of trouble or discontinuation of operation of said distribution service provider server, re-distribution of said license data to said user terminal or license data of alternate contents replacing said license data based on the result of insuring processing of said distribution service provider server.

20. (Amended) An insurance system for guaranteeing re-distribution of license data for authorizing playback of contents by a user terminal, comprising:
a distribution service provider server that distributes said license data;
a user terminal of a user who uses the distribution service of said license data; and
aninsuranceserverthatguaranteesre-distribution of said contents to said user terminal,
wherein said insurance server comprising:
an insurance contract database that stores the content of the insurance contract as a result of insuring processing; and
a contract processing section that executes, in the event of a version upgrade of said contents, re-distribution of license data to playback the upgraded contents based on the result of insuring processing of said distribution service provider server.

21. (Amended) The insurance system according to claim 19, wherein said insurance server further comprises a detection section that detects the number of times trouble occurs in the service provided by said distribution service provider and the time until the service is recovered and said contract processing section determines guarantee conditions for said distribution service provider based on said detection result.

22. (Deleted)

23. (Deleted)

24. (Amended) An insurance system for guaranteeing re-distribution of license data for authorizing playback of contents by a user terminal, comprising:
a distribution service provider server that distributes said license data;
a user terminal of a user who uses distribution service of said license data; and
an insurance server that guarantees re-distribution of said contents to said user terminal,
wherein said insurance server comprises a license control section that controls a license list that describes license data available to said user terminal and sends a copy of part of said license list to said user terminal, and
said user terminal comprises a license usage decision section that decides the validity of the license concerning the contents during playback of said contents with reference to the copy of said license list.

25. (Deleted)

26. (Deleted)

27. (Deleted)

28. (Deleted)

29. (Deleted)

30. (Amended) An insurance system for guaranteeing re-distribution of license data for authorizing playback of contents by a user terminal, comprising:
a distribution service provider server that distributes said license data;
a user terminal of a user who uses distribution service of said license data; and
an insurance server that guarantees re-distribution of said contents to said user terminal,
wherein said insurance server comprises a contract processing section that attaches guarantee condition information of the guaranteed re-distribution to an electronic receipt of said contents issued to said user terminal.

31. (Deleted)

32. (Deleted)

33. (Deleted)

34. (Deleted)

35. (Deleted)

36. (Amended) An insurance server comprising:
a contract processing section that carries out insurance contract processing concerning the usage of contents by a user terminal;
an insurance contract database that stores a record of the insurance contract;
a license control section that controls license data for said user terminal to use said contents based on a license list;
a re-distribution reception section that receives a request for re-distribution from said user terminal; and
a re-distribution history database that stores a history of the re-distribution to said user terminal,
wherein said contract processing section associates identification information of said user terminal with identification information of said license data and thereby signs a contract for the use of said contents with said user terminal and the provider server of said license data.

37. (Amended) An insurance server comprising:
a contract processing section that carries out insurance contract processing concerning the usage of contents by a user terminal;
an insurance contract database that stores records of the insurance contract;
a license control section that controls license data for said user terminal to use said contents based on a license list;
a re-distribution reception section that receives a request for re-distribution from said user terminal; and
a re-distribution history database that stores a history of the re-distribution to said user terminal,
wherein said re-distribution reception section comprises a function of searching for alternate contents that replaces guaranteed contents.

38. (Amended) An insurance server comprising:
a contract processing section that carries out insurance contract processing concerning the usage of contents by a user terminal;
an insurance contract database that stores records of the insurance contract;
a license control section that controls license data for said user terminal to use said contents based on a license list;
a re-distribution reception section that receives a request for re-distribution from said user terminal; and
a re-distribution history database that stores a history of the re-distribution to said user terminal,
wherein said contract processing section generates a pair of public key and private key every time an insurance contract with said user terminal is concluded and sends insurance policy data including said private key to said user terminal.

39. (Amended) The insurance server according to claim 38, wherein said contract processing section encrypts the license of the distributed contents acquired from the server of the distribution service provider using said public key and sends the license to said user terminal.

40. (Amended) An insurance server comprising:
a contract processing section that carries out insurance contract processing concerning the usage of contents by a user terminal;
an insurance contract database that stores records of the insurance contract;
a license control section that controls license data for said user terminal to use said contents based on a license list;
a re-distribution reception section that receives a request for re-distribution from said user terminal; and
a re-distribution history database that stores a history of the re-distribution to said user terminal,
wherein guarantee condition data is controlled according to said insurance contract database for each said user terminal.

41. (Amended) The insurance server according to claim 36, comprising a detection section that detects the number of times trouble occurs in the service provided by the provider server of said license data and/or the time until the service is recovered,
wherein said contract processing section determines guarantee conditions for said provider server based on the detection result of said detection section.

42. (Amended) A user terminal used for an insurance system that guarantees re-distribution of license data for the user terminal to use contents, comprising:
a storage section that stores an insurance policy issued by an insurance server and encrypted contents;
a license usage decision section that stores the license data acquired through said insurance server and decides the validity of the license data for said contents when said contents are playbacked;
a playback section that decodes when said license data is valid, said contents using a decoding key included in said license data; and
a re-distribution requesting section that requests said insurance server to re-distribute, in the event of loss of said license data or said contents, said license data or said contents.

43. (Amended) The user terminal according to claim 42, comprising a license list for the own terminal that stores partial data of the license list stored in said insurance server,
wherein said license usage decision section decides the validity of the license data with reference to said license list for the own terminal and when the validity cannot be decided from the data of said license list for the own terminal, inquires of said insurance server about the validity of the license data.

44. (Amended) The user terminal according to claim 42, wherein when the validity of said license data is decided, said license usage decision section inquires of said insurance server about the validity of all license data.

45. (Deleted)

46. (Deleted)

47. (Amended) An insurance system comprising:
a distribution service provider server that issues license data for authorizing the use of contents by a user terminal;
a user terminal that uses said contents based on said issued license data; and
an insurance server that guarantees re-issuance of said license data,
wherein said user terminal comprises a re-distribution requesting section that requests said insurance server to reissue said license data and said insurance server comprises a re-distribution request reception section that receives the request for re-issuance of said license data and sends the received request for re-issuance of said license data to said distribution service provider server.

48. (Amended) The insurance system according to claim 47, wherein said insurance server comprises a re-distribution request reception section that decides whether the license data to be reissued may or may not be issued based on said request for re-issuance and issues said license data to be reissued or alternate license data for the use of other alternate contents based on the decision result according to said request for re-issuance.

49. (Amended) An insurance system comprising:
a distribution service provider server that issues license data for authorizing the use of contents for purchasing processing thereof;
a user terminal that uses contents based on said issued license data;
an insurance server that guarantees re-issuance of said license data based on predetermined insuring processing,
wherein said distribution service provider server stores purchased information of said license data and said insurance server comprises a contract processing section that confirms the authenticity of the purchased information based on the purchased information of said stored license data and carries out said insuring processing based on the confirmation result.

50. (Amended) The insurance system according to claim 49, wherein said insurance server comprises a contract processing section that distributes insurance policy information for guaranteeing re-issuance of said license data to the user terminal that has taken out an insurance policy in said insuring processing.

51. (Amended) The insurance system according to claim 49, wherein said insurance server comprises a license control section that issues and stores license list information indicating license data available to the user terminal used by the insurer of said insurance in said insuring processing.

52. (Amended) An insurance system comprising:
a distribution service provider server that issues license data for authorizing the use of contents for purchasing processing thereof;
a user terminal that uses contents based on said issued license data; and
an insurance server that guarantees re-issuance of said license data based on predetermined insuring processing,
wherein in said insuring processing, said insurance server comprises a contract processing section that issues provisional insurance policy information that guarantees re-issuance of said license data, distributes the provisional insurance policy information to the user terminal that has taken out an insurance policy and then issues said license data based on a request for purchasing said license data and the presentation of said issued provisional insurance policy information, updates said provisional insurance policy information in response to the issuance of said license data and thereby issues official insurance policy information.

53. (Amended) The insurance system according to claim 52, wherein in the processing of issuing said insurance policy information, said insurance server comprises a license control section that issues license list information indicating license data available to the insurer of the insurance.

54. (Amended) An insurance system comprising:
a distribution service provider server that issues license data for authorizing the use of contents;
a user terminal that uses contents based on said issued license data; and
an insurance server that guarantees re-issuance of said license data based on predetermined insuring processing,
wherein said insurance server comprises a contract processing section that issues insurance policy information specifying the license data for which said re-issuance is guaranteed and distributes the insurance policy information to said user terminal.

55. (Amended) The insurance system according to claim 54, wherein said insurance server comprises a license control section that issues license list information indicating license data available to the insurer of said insurance.

56. (Amended) An insurance system comprising:
a distribution service provider server that issues license data for authorizing the use of contents;
a user terminal that uses contents based on said issued license data; and
an insurance server that guarantees re-issuance of said license data based on predetermined insuring processing,
wherein said insurance server comprises a contract processing section that issues as information for guaranteeing re-issuance of said license data, insurance policy information including information specifying the license data to be guaranteed and information indicating conditions under which the guarantee is applied based on said insuring processing.

57. (Amended) The insurance system according to claim 56, wherein said insurance policy information includes a decoding key for decrypting said license data to be guaranteed.

58. (Amended) An insurance system comprising:
a distribution service provider server that issues license data for authorizing the use of contents;
a user terminal that uses contents based on said issued license data; and
an insurance server that guarantees re-issuance of said license data based on predetermined insuring processing,
wherein said insurance server comprises a license control section that issues identification information on license data available to the user terminal used by the insurer of said insurance and license list information including the validity/invalidity of the license data.

59. (Amended) The insurance system according to claim 58, wherein said license control section invalidates the corresponding license data of said license list information based on re-issuance of said license data and adds new identification information corresponding to said reissued license data to said license list information as valid information.

60. (Amended) The insurance system according to claim 58 or 59, wherein said user terminal comprises a license usage decision section that prohibits the execution of invalid license data according to said license list information.

61. (Deleted)

62. (Amended) An insurance system comprising:
a distribution service provider server that distributes contents;
a user terminal that uses said distributed contents; and
an insurance server that guarantees re-distribution of said contents,
wherein said user terminal comprises a re-distribution requesting section that requests said insurance server to reissue said license data and said insurance server comprises a re-distribution request reception section that receives the request for re-distribution of said contents and sends the received request for re-distribution of said contents to said distribution service provider server.

63. (Amended) The insurance system according to claim 62, wherein said insurance server comprises a re-distribution request reception section that decides whether the contents to be re-distributed may or may not be distributed based on said request for re-distribution and distributes said contents to be re-distributed or other alternate contents based on the decision result according to said request for re-distribution.

64. (Amended) An insurance system comprising:
a distribution service provider server that distributes contents for purchasing processing thereof;
a user terminal that uses said distributed contents; and
an insurance server that guarantees re-distribution of said contents based on predetermined insuring processing,
wherein said distribution service provider server stores purchased information of said contents, and said insurance server comprises a contract processing section that confirms the authenticity of purchased information based on the purchased information of said stored contents and carries out said insuring processing based on the confirmation result.

65. (Amended) The insurance system according to claim 64, wherein said insurance server comprises a contract processing section that distributes insurance policy information for guaranteeing re-distribution of said contents to the insured user terminal in said insuring processing.

66. (Amended) The insurance system according to claim 64, wherein said insurance server comprises a contents control section that issues and stores contents list information indicating contents available to the user terminal used by the insurer of the insurance in said insuring processing.

67. (Amended) An insurance system comprising:
a distribution service provider server that distributes contents for purchasing processing thereof;
a user terminal that uses said distributed contents; and
an insurance server that guarantees re-distribution of said contents based on predetermined insuring processing,
wherein said insurance server comprises a contract processing section that issues provisional insurance policy information for guaranteeing re-distribution of said contents in said insuring processing, distributes the provisional insurance policy information to said insured user terminal and then distributes said contents based on a request for purchasing said contents and the presentation of said issued provisional insurance policy information, updates said provisional insurance policy information in response to the distribution of contents and thereby issues official insurance policy information.

68. (Amended) The insurance system according to claim 67, wherein said insurance server comprises a contents control section that issues contents list information indicating contents available to the insurer of the insurance in the processing of issuing said insurance policy information.

69. (Amended) An insurance system comprising:
a distribution service provider server that distributes contents;
a user terminal that uses said distributed contents; and
an insurance server that guarantees re-distribution of said contents based on predetermined insuring processing,
wherein said insurance server comprises a contract processing section that issues insurance policy information specifying contents for which said re-distribution is guaranteed and distributes the insurance policy information to said user terminal.

70. (Amended) The insurance system according to claim 69, wherein said insurance server comprises a contents control section that issues contents list information indicating contents available to the insurer of said insurance.

71. (Amended) An insurance system comprising:
a distribution service provider server that distributes contents;
a user terminal that uses said distributed contents; and
an insurance server that guarantees re-distribution of said contents based on predetermined insuring processing,
wherein said insurance server comprises a contract processing section that issues as information for guaranteeing re-distribution of said contents, insurance policy information including information specifying contents to be guaranteed and information indicating conditions under which the guarantee is applied based on said insuring processing.

72. (Amended) The insurance system according to claim 71, wherein said insurance policy information includes a decoding key for decrypting said contents to be guaranteed.

73. (Amended) An insurance system comprising:
a distribution service provider server that distributes contents;
a user terminal that uses said distributed contents; and
an insurance server that guarantees re-distribution of said contents based on predetermined insuring processing,
wherein said insurance server comprises a contents control section that issues contents list information including identification information of contents available to the insurer of said insurance and information on the validity/invalidity of the contents.

74. (Amended) The insurance system according to claim 73, wherein said contents control section invalidates said contents of said contents list information based on the execution of re-distribution of said contents and adds new identification information corresponding to said re-distributed contents to said contents list information as valid information.

75. (Amended) The insurance system according to claim 73 or 74, wherein said user terminal comprises a contents usage decision section that prohibits the use of invalid contents in said contents list information.

76. (Amended) An insurance server in an insurance system that guarantees re-issuance of license data for authorizing the use of contents issued by a distribution service provider server, comprising a re-distribution request reception section that receives a request for re-issuance of said license data and sends the received request for re-issuance of said license data to said distribution service provider server.

77. (Amended) The insurance server according to claim 76, comprising a re-distribution request reception section that decides whether the license data to be reissued may or may not be issued based on said request for re-issuance and issues said license data to be reissued or alternate license data for using other alternate contents based on the decision result according to said request for re-issuance.

78. (Amended) An insurance server in an insurance system that guarantees re-issuance of license data for authorizing the use of contents issued by a distribution service provider server according to predetermined purchasing processing based on predetermined insuring processing, comprising a contract processing section that confirms the authenticity of the purchased information stored in said distribution service provider server based on the purchased information of the license data stored in said distribution service provider server and carries out said insuring processing based on the confirmation result.

79. (Amended) An insurance server in an insurance system that guarantees re-issuance of license data for authorizing the use of contents issued by a distribution service provider server according to predetermined purchasing processing based on predetermined insuring processing, comprising a contract processing section that issues provisional insurance policy information for guaranteeing re-issuance of said license data in said insuring processing, distributes said provisional insurance policy information to said insured user terminal, then issues said license data based on the request for purchasing said license data and the presentation of said issued provisional insurance policy information, updates said provisional insurance policy information in response to the issuance of said license data and thereby issues official insurance policy information.

80. (Amended) An insurance server in an insurance system that guarantees re-issuance of license data for authorizing the use of contents issued by a distribution serviceprovider server, comprising a contract processing section that issues insurance policy information specifying the license data for which said re-issuance is guaranteed and distributes the insurance policy information to said user terminal.

81. (Amended) An insurance server in an insurance system that guarantees re-issuance of license data for authorizing the use of contents issued by a distribution service provider server based on predetermined insuring processing, comprising a contract processing section that issues as information for guaranteeing re-issuance of said license data, insurance policy information including information specifying the license data to be guaranteed and information indicating conditions under which the guarantee is applied based on said insuring processing.

82. (Amended) An insurance server in an insurance system that guarantees re-issuance of license data for authorizing the use of contents issued by a distribution service provider server based on predetermined insuring processing, comprising a license control section that issues identification information on license data available to the user terminal used by the insurer of said insurance and license list information including information on the validity/invalidity of the license data.

83. (Amended) An insurance server in an insurance system that guarantees re-distribution of contents distributed by a distribution service provider server, comprising a re-distribution request reception section that receives a request for re-distribution of said contents supplied from said user terminal and sends the received request for re-distribution of said contents to said distribution service provider server.

84. (Amended) The insurance server according to claim 83, comprising a re-distribution request reception section that decides whether contents to be re-distributed may or may not be distributed based on said request for re-distribution and distributes said contents to be re-distributed or other alternate contents based on the decision result according to said request for re-distribution.

85. (Amended) An insurance server in an insurance system that guarantees re-distribution of contents distributed from a distribution service provider server according to predetermined purchasing processing based on predetermined insuring processing, comprising a contract processing section that confirms the authenticity of the purchased information stored in said distribution service provider server based on the purchased information of said contents and carries out said insuring processing based on the confirmation result.

86. (Amended) An insurance server in an insurance system that guarantees re-distribution of contents distributed from a distribution service provider server according to predetermined purchasing processing based on predetermined insuring processing, comprising a contract processing section that issues provisional insurance policy information for guaranteeing re-distribution of said contents in said insuring processing, distributes said provisional insurance policy information to the user terminal used by said insured user, then distributes said contents based on a request for purchasing said contents and the presentation of said issued provisional insurance policy information, updates said provisional insurance policy information in response to the distribution of contents and thereby issues official insurance policy information.

87. (Amended) An insurance server in an insurance system that guarantees re-distribution of contents distributed from a distribution service provider server, comprising a contract processing section that issues insurance policy information specifying contents for which said re-distribution is guaranteed and distributes the insurance policy information to said user terminal.

88. (Amended) An insurance server in an insurance system that guarantees re-distribution of contents distributed from a distribution service provider server based on predetermined insuring processing, comprising a contract processing section that issues as information for guaranteeing re-distribution of said contents, insurance policy information including information specifying contents to be guaranteed and information indicating conditions under which the guarantee is applied based on said insuring processing.

89. (Amended) An insurance server in an insurance system that guarantees re-distribution of contents distributed from a distribution service provider server based on predetermined insuring processing, comprising a contents control section that issues contents list information including identification information on contents available to the user terminal used by the insurer of said insurance and information on the validity/invalidity of the contents.

90. (Amended) A distribution service provider server that issues a license for authorizing the use of contents by a user terminal, which receives a request for issuance of a license from an insurance server that guarantees re-issuance of said license, issues a license based on the license issuance request and returns the issued license to said insurance server.

91. (Amended) A distribution service provider server that distributes contents used by a user terminal, which receives a contents request from an insurance server that guarantees re-distribution of said contents and returns said contents to said insurance server based on the contents request.

92. (Amended) A user terminal that uses contents based on license data for authorizing the use of said contents issued by a distribution service provider server, comprising a license usage decision section that decides whether the contents may or may not be used based on license data list information indicating available contents supplied from said insurance server according to insuring processing carried out with an insurance server that guarantees re-issuance of said license data.

93. (Amended) A user terminal that uses contents distributed from a distribution service provider server, comprising a contents usage decision section that decides whether the contents may or may not be used based on contents list information indicating available contents supplied from said insurance server according to insuring processing carried out with an insurance server that guarantees re-distribution of said contents.

94. (Amended) A processing program executed by an insurance server in an insurance system that guarantees re-issuance of license data for authorizing the use of contents by the user terminal issued by a distribution service provider server, comprising:
a re-issuance request reception step of receiving a request for re-issuance of said license data supplied from said user terminal; and
a re-issuance request transmission step of transmitting the request for re-issuance to said distribution service provider server based on said received request for re-issuance.

95. (Amended) The processing program according to claim 94, comprising:
a decision step of deciding whether license data to be reissued may or may not be issued based on the history of requests for re-issuance of said license data; and
an issuance step of issuing said license data to be reissued or alternate license data for using other alternate contents based on the decision result according to said request for re-issuance.

96. (Amended) A processing program executed by an insurance server that carries out predetermined insuring processing in an insurance system that guarantees re-issuance of license data for authorizing the use of contents by a user terminal issued by a distribution service provider server according to predetermined purchasing processing based on said insuring processing, comprising:
a confirmation step of confirming the authenticity of the purchased information transmitted from said user terminal to said insurance server to said distribution service provider server based on the purchased information of said license; and
an insuring processing step of carrying out said insuring processing based on the confirmation result.

97. (Amended) A processing program executed by an insurance server that carries out predetermined insuring processing in an insurance system that guarantees re-issuance of license data for authorizing the use of contents issued by a distribution service provider server according to predetermined purchasing processing based on said insuring processing, comprising:
a provisional issuance step of issuing provisional insurance policy information for guaranteeing re-issuance of said license data in said insuring processing; and
an official issuance step of issuing said license data based on a request for purchasing said license data and the presentation of said issued provisional insurance policy information, updating said provisional insurance policy information in response to the issuance of the license data and thereby issuing official insurance policy information.

98. (Amended) A processing program executed by an insurance server in an insurance system that guarantees re-issuance of license data for authorizing the use of contents by a user terminal issued by a distribution service provider server, comprising:
an issuance step of issuing insurance policy information that specifies license data for which said re-issuance is guaranteed; and
a transmission step of transmitting said issued insurance policy information to said user terminal.

99. (Amended) A processing program executed by an insurance server that carries out predetermined insuring processing in an insurance system that guarantees re-issuance of license data for authorizing the use of contents by a user terminal issued by a distribution service provider server based on said insuring processing, comprising:
an issuance step of issuing insurance policy information including information specifying license data to be guaranteed and information indicating conditions under which the guarantee is applied as information for guaranteeing re-issuance of said license data based on said insuring processing; and
a transmission step of transmitting said issued insurance policy information to said user terminal.

100. (Amended) A processing program executed by an insurance server that carries out predetermined insuring processing in an insurance system that guarantees re-issuance of license data for authorizing the use of contents by a user terminal issued by a distribution service provider server based on said insuring processing, comprising:
an issuance step of issuing license list information including identification information of license data available to the insurer of said insurance and information on the validity/invalidity of the license data; and
a transmission step of transmitting said issued license list to said user terminal.

101. (Amended) A processing program executed by an insurance server in an insurance system that guarantees re-distribution of contents distributed by a distribution service provider server, comprising:
a reception step of receiving a request for re-distribution of said contents supplied from a user terminal that uses said contents from said user terminal; and
a supply step of supplying said received request for re-distribution to said distribution service provider server.

102. (Amended) The processing program according to claim 100, comprising:
a decision step of deciding whether the contents to be re-distributed may or may not be distributed based on said request for re-distribution; and
a distribution step of distributing said contents to be re-distributed or other alternate contents to said user terminal based on the decision result according to said request for re-distribution.

103. (Amended) A processing program executed by an insurance server that carries out predetermined insuring processing in an insurance system that guarantees re-distribution of contents distributed from a distribution service provider server according to predetermined purchasing processing based on said insuring processing, comprising:
a confirmation step of confirming the authenticity of the purchased information sent from said user terminal to said insurance server to said distribution service provider server based on the purchased information of said contents; and
an insuring processing step of carrying out said insuring processing based on the confirmation result.

104. (Amended) A processing program executed by an insurance server that carries out predetermined insuring processing in an insurance system that guarantees re-distribution of contents distributed from a distribution service provider server according to predetermined purchasing processing based on said insuring processing, comprising:
a provisional issuance step of issuing provisional insurance policy information for guaranteeing re-distribution of said contents in said insuring processing; and
an issuance step of distributing said contents based on a request for purchasing said contents and the presentation of said issued provisional insurance policy information, updating said provisional insurance policy information in response to the distribution of the contents and thereby issuing official insurance policy information.

105. (Amended) A processing program executed by an insurance server in an insurance system that guarantees re-distribution of contents distributed from a distribution service provider server, comprising:
an issuance step of issuing insurance policy information that specifies contents for which said re-distribution is guaranteed; and
a transmission step of transmitting said issued insurance policy information to a user terminal that uses said contents.

106. (Amended) A processing program executed by an insurance server that carries out predetermined insuring processing in an insurance system that guarantees re-distribution of contents distributed from a distribution service provider server based on said insuring processing, comprising:
an issuance step of issuing insurance policy information including information specifying the contents to be guaranteed and information indicating conditions under which the guarantee is applied as information for guaranteeing re-distribution of said contents based on said insuring processing; and
a transmission step of transmitting said issued insurance policy information to a user terminal that uses said contents.

107. (Amended) A processing program executed by an insurance server that carries out predetermined insuring processing in an insurance system that guarantees re-distribution of contents distributed from a distribution service provider server based on said insuring processing, comprising:
an issuance step of issuing contents list information including identification information of contents available to a user terminal used by the insurer of said insurance and information indicating the validity/invalidity of the contents; and
a transmission step of transmitting said issued contents list to said user terminal.

108. (Amended) A processing program executed by a distribution service provider server that issues license data for authorizing the use of contents, comprising:
an issuance step of issuing license data based on a request for issuance of a license from an insurance server that guarantees re-issuance of said license data; and
a returning step of returning the issued license to said insurance server.

109. (Amended) A processing program executed by a distribution service provider server that distributes contents, comprising a returning step of returning contents to an insurance server that guarantees re-distribution of said contents based on a request for said contents from said insurance server.

110. (Amended) A processing program executed by a user terminal that uses contents based on license data for authorizing the use of said contents issued by a distribution service provider server, comprising:
an insuring processing step of carrying out insuring processing with an insurance server that guarantees re-issuance of said license; and
a contents using step of deciding whether contents may or may not be used based on list information of said license data supplied from said insurance server according to said insuring processing.

111. (Amended) A processing program executed by a user terminal that uses contents distributed from a distribution service provider server, comprising:
an insuring processing step of carrying out insuring processing with an insurance server that guarantees re-distribution of said contents; and
a contents using step of deciding whether contents may or may not be used based on list information of available contents supplied from said insurance server according to said insuring processing.
